# EUROPEAN PATENT APPLICATION

(11) **EP 4 614 210 A1**
(43) Date of publication of application: **10.09.2025**
(21) Application number: 23886200.7
(22) Date of filing: 31.10.2023
(51) Int. Cl.: G02B 27/00, G02B 27/18, G02B 27/02, G03B 21/14, G03B 21/20, G03B 21/28, G03B 35/16, H04N 13/363

(54) **PROJECTION DEVICE AND ELECTRONIC DEVICE INCLUDING SAME**

(30) Priority: 31.10.2022 KR 20220142576; 31.10.2022 KR 20220142590; 09.12.2022 KR 20220171178; 20.03.2023 KR 20230035814; 20.03.2023 KR 20230035815; 23.08.2023 KR 20230110626
(71) Applicant: LG INNOTEK CO. LTD, Gangseo-gu Seoul 07796 (KR)
(72) Inventor: SEO, Eun Seong, Seoul 07796 (KR); KIM, Ji Sung, Seoul 07796 (KR); JI, Jung Goo, Seoul 07796 (KR)
(74) Representative: Plasseraud IP
(86) International application number: PCT/KR2023/017071
(87) International publication number: WO 2024/096504

(57) **Abstract**

An embodiment discloses a projection device including: a barrel on which a lens group is disposed; a light guide disposed within the barrel; a light source which emits light to the light guide; a lens disposed between the light source and the light guide; and a masking layer disposed between the light guide and the lens or between the light guide and the lens group, wherein the masking layer is disposed along the edge of the outer side of the light guide.

## Description

### [Technical Field]

Embodiments relate to a projection device and an electronic device including the same.

### [Background Art]

Virtual reality (VR) refers to a specific environment, situation, or technology itself that resembles reality created by artificial technology using computers or the like but is not real.

Augmented reality (AR) refers to a technology that combines virtual objects or information with a real environment to make it look like objects existing in the original environment.

Mixed reality (MR) or hybrid reality refers to the merging of the virtual worlds and real worlds to create new environments or new information. In particular, it is called mixed reality when it is possible to interact in real time between what exists in reality and what exists in the virtual in real time.

At this time, the created virtual environment, situation, or the like stimulates the user's five senses and enables spatial and temporal experiences similar to those of the real world, thereby enabling users to travel freely across the boundaries between reality and imagination. In addition, users can not only immerse themselves in such environments but also interact with the elements realized in such environments, such as adding operations and providing instructions using devices existing in the real space.

Recently, research on equipment (including gears and devices) used in this field of technology has been actively conducted. However, there is a growing demand for miniaturization and improvement of optical performance in such devices.

### [Disclosure]

### [Technical Problem]

Embodiments are directed to providing a projection device and an electronic device including the same, which are used in augmented reality (AR) and the like, in which stray light is eliminated by preventing total reflection from occurring on an outer surface of a light guide (e.g., a prism) through the light guide having a masking layer.

Embodiments are also directed to providing a projection device and an electronic device with improved optical performance, such as flare reduction, through masking.

Embodiments are also directed to providing a projection device and an electronic device in which miniaturization of a light source is easily achieved through a guide lens and an aspect ratio.

Embodiments are directed to providing a projection device and an electronic device including the same, which are used in AR and the like, in which stray light is eliminated by preventing total reflection from occurring on an outer surface of a light guide (e.g., a prism) through the addition of a guide lens coupled to the outer surface of the light guide.

Embodiments are also directed to providing a projection device and an electronic device with improved optical performance, such as flare reduction, by further suppressing total reflection through the addition of a guide lens coupled to an outer surface of a light guide.

Embodiments are also directed to providing a projection device and an electronic device in which manufacturing is facilitated and which have improved optical performance, such as flare reduction, through the bonding of lenses.

Objectives to be solved by the embodiment are not limited to the above-described objectives and will include objectives and effectiveness which may be identified by solutions for the objectives and the embodiments described below.

### [Technical Solution]

A projection device according to an embodiment includes a barrel in which a lens group is disposed, a light guide disposed in the barrel, a light source configured to emit light to the light guide, a lens disposed between the light source and the light guide, and a masking layer disposed between the light guide and the lens or between the light guide and the lens group, wherein the masking layer is disposed along an edge of an outer surface of the light guide.

The outer surface of the light guide may include first to third outer surfaces facing the light source, and a fourth outer surface facing the lens group.

The masking layer may be disposed on at least one of the first to fourth outer surfaces.

The masking layer may include first to fourth masking layers disposed on the first to fourth outer surfaces, respectively.

The projection device may further include a bonding member disposed between the light guide and the lens or between the light guide and the lens group.

The bonding member may be in contact with the masking layer, the lens, and the light guide.

The masking layer may be in contact with the lens or the outer surface of the light guide.

The light guide may include a fifth outer surface and a sixth outer surface, and the fifth outer surface and the sixth outer surface may be outer surfaces of the light guide other than the first to fourth outer surfaces.

The masking layer may include first to fourth masking layers disposed on the first to fourth outer surfaces.

The projection device may include a fifth masking layer disposed on the fifth outer surface, and a sixth masking layer disposed on the sixth outer surface.

The fifth masking layer and the sixth masking layer may be disposed over entire surfaces of the fifth outer surface and the sixth outer surface, respectively.

The masking layer may have a long side and a short side with different lengths.

Light emitted from the light source may be incident on the first to third outer surfaces, emitted from the fourth outer surface, and provided toward the lens group.

The first to fourth masking layers may each include an opening area, and the opening area may correspond to a size of the light source.

The opening area may be larger in size than an emission surface of the light source.

One of the first to fourth masking layers may have a greater thickness in an area in contact with the adjacent masking layer than in an area in contact with the other masking layers.

The lens may include a first guide lens adjacent to the first outer surface, a second guide lens adjacent to the second outer surface, and a third guide lens adjacent to the third outer surface.

The first to third guide lenses may each have positive or negative refractive power.

The masking layer including the first to fourth masking layers may include a first area, a third area located to face the first area, a second area positioned between the first area and the third area, and a fourth area positioned between the first area and the third area and disposed to face the second area.

Thicknesses of the first to fourth areas of the first to fourth masking layers may be different from each other.

A projection device according to an embodiment includes a barrel in which a lens group is disposed, a light guide disposed in the barrel, a light source configured to emit light to the light guide, and a lens disposed between the lens group and the light guide, or between the light source and the light guide, wherein the lens is coupled to the light guide.

A ratio of a refractive index of the lens to a refractive index of the light guide may be in the range of 1:0.98 to 1:1.02.

The outer surface of the light guide may include first to third outer surfaces facing the light source, and a fourth outer surface facing the lens group.

The lens may include at least one guide lens, and the at least one guide lens may be disposed on at least one of the first to fourth outer surfaces.

The lens may include a first guide lens disposed on the first outer surface, a second guide lens disposed on the second outer surface, a third guide lens disposed on the third outer surface, and a fourth guide lens disposed on the fourth outer surface.

The first guide lens, the second guide lens, and the third guide lens may each have a surface facing the light source or a surface facing the light guide having the same radius of curvature.

A surface of each of the first guide lens, the second guide lens, and the third guide lens facing the light source may be concave or convex.

A surface of the fourth guide lens facing the lens group may have a positive or negative radius of curvature.

The lens may be made of the same material as the light guide.

The projection device may further include a bonding member disposed between the lens and the light guide, wherein a ratio of a refractive index of the bonding member and a refractive index of the light guide or the lens may be in the range of 1:0.98 to 1:1.02.

A material of the bonding member may be the same as the material of the lens.

The light guide may include a fifth outer surface and a sixth outer surface, and the fifth outer surface and the sixth outer surface may be outer surfaces of the light guide other than the first to fourth outer surfaces.

The lens may further include a fifth guide lens disposed on the fifth outer surface and a sixth guide lens disposed on the sixth outer surface.

The fifth guide lens and the sixth guide lens may have a different thickness from the first to third guide lenses.

The first to third guide lenses may have a different thickness from the fourth guide lens.

A projection device according to an embodiment includes a barrel in which a lens group is disposed, a light guide disposed in the barrel, a light source configured to emit light to the light guide, and a lens disposed between the light source and the light guide, wherein the light guide includes a groove disposed at an edge of a surface facing at least one of the light source and the lens group.

The groove may be an open loop or a closed loop on the surface.

The projection device may include a masking layer disposed in at least a portion of the groove.

The surface may include first to third surfaces facing the light source and a fourth surface facing the lens group.

The groove may be located in the first to fourth surfaces.

The light source may include first to third light sources corresponding to the first to third surfaces, and each of the first to third light sources may correspond to an aspect ratio of a respective one of the first to third surfaces facing the light source.

An area of the light source may be smaller than an area of one of the first to third surfaces.

The lens may include a first guide lens adjacent to the first surface, a second guide lens adjacent to the second surface, and a third guide lens adjacent to the third surface.

The first to third guide lenses may each have positive or negative refractive power.

Surfaces of the first to third guide lenses facing respective adjacent first to third light sources may be convex.

The projection device may include an additional lens in contact with the surface.

The light guide may include an attached lens disposed on the surface and having a length or area smaller than that of the surface.

The lens may be disposed in contact with or spaced apart from the surface.

The lens may be disposed on the groove and may overlap the lens.

The lens may be located inside the groove on the surface.

### [Advantageous Effects]

Embodiments implement a projection device and an electronic device including the same, which are used in augmented reality (AR) and the like, in which stray light can be eliminated by preventing total reflection from occurring on an outer surface of a light guide (e.g., a prism) through the light guide having a masking layer.

Embodiments also implement a projection device and an electronic device with improved optical performance, such as flare reduction, through masking.

Embodiments also implement a projection device and an electronic device in which miniaturization of a light source can be easily achieved.

Embodiments also implement a projection device and an electronic device including the same, which are used in AR and the like, in which stray light can be eliminated by preventing total reflection from occurring on an outer surface of a light guide (e.g., a prism) through the addition of a guide lens coupled to the outer surface of the light guide.

Embodiments also implement a projection device and an electronic device with improved optical performance, such as flare reduction, by further suppressing total reflection through the addition of a guide lens coupled to an outer surface of a light guide.

Embodiments also implement a projection device and an electronic device, in which manufacturing can be facilitated and which have improved optical performance, such as flare reduction, through the bonding of lenses.

Various advantages and effects of the present invention are not limited to the above description and can be more easily understood through the description of specific exemplary embodiments of the present invention.

### [Description of Drawings]

FIG. 1 is a conceptual diagram illustrating an embodiment of an artificial intelligence (AI) device.
FIG. 2 is a block diagram illustrating a configuration of an extended reality electronic device according to an embodiment of the present invention.
FIG. 3 is a perspective view of an augmented reality electronic device according to a first embodiment of the present invention.
FIGS. 4 to 6 are conceptual diagrams for describing various display methods applicable to a display unit according to the embodiment of the present invention.
FIG. 7 is a perspective view of a projection device according to one embodiment.
FIG. 8 is an exploded perspective view of the projection device according to one embodiment.
FIG. 9 is a view illustrating the coupling of a lens group, a first spacer, a light guide, lenses, and a second spacer to a barrel in the projection device according to one embodiment.
FIG. 10 is a view illustrating the coupling between the barrel, a housing, and an additional housing in the projection device according to one embodiment.
FIG. 11 is a view illustrating the coupling between the housing and light source units in the projection device according to one embodiment.
FIG. 12 is a cross-sectional view taken along line AA' of FIG. 7.
FIG. 13 is a partial perspective view of a light guide, bonding members, a lens group, and lenses in a projection device according to a first embodiment.
FIG. 14 is a cross-sectional view taken along line BB' of FIG. 13.
FIG. 15A is a view from a first outer surface or a fourth outer surface of FIG. 13.
FIG. 15B is a view illustrating various usage examples.
FIG. 16 is a view from a second outer surface or a third outer surface of FIG. 13.
FIG. 17 is a cross-sectional view of a light guide, bonding members, and a lens group in a projection device according to a second embodiment.
FIG. 18 is a view illustrating effects of the projection device according to the embodiment.
FIG. 19 is a partial perspective view of a light guide, bonding members, a lens group, and lenses in a projection device according to a third embodiment.
FIG. 20 is a partial perspective view of a light guide, bonding member, a lens group, and lenses in a projection device according to a fourth embodiment.
FIG. 21 is a partial perspective view of a light guide, bonding members, a lens group, and lenses in a projection device according to a fifth embodiment.
FIG. 22 is a partial perspective view of a light guide, bonding members, a lens group, and lenses in a projection device according to a sixth embodiment.
FIG. 23 is a partial perspective view of a light guide, bonding members, a lens group, and lenses in a projection device according to a seventh embodiment.
FIGS. 24 to 26 are views illustrating effects of the projection device according to the seventh embodiment.
FIG. 27 is a cross-sectional view of the lens group, the light guide, the lenses, light sources, and optical elements in the projection device according to the seventh embodiment.
FIG. 28 is a cross-sectional view of a lens group, a light guide, lenses, light sources, and optical elements in a projection device according to an eighth embodiment.
FIG. 29 is a cross-sectional view of a lens group, a light guide, lenses, light sources, and optical elements in a projection device according to a ninth embodiment.
FIG. 30 is a cross-sectional view of a lens group, a light guide, lenses, light sources, and optical elements in a projection device according to a tenth embodiment.
FIG. 31 is a cross-sectional view of a lens group, a light guide, lenses, light sources, and optical elements in a projection device according to an eleventh embodiment.
FIG. 32 is a view illustrating various examples of the lens in the projection device according to the embodiment.
FIG. 33 is a perspective view of a light guide according to an example in a projection device according to a twelfth embodiment.
FIG. 34 is a perspective view of a light guide according to another example in the projection device according to the twelfth embodiment.
FIG. 35 is a cross-sectional view of the light guide according to a usage example, taken along line BB' in FIG. 34.
FIG. 36 is a cross-sectional view of a light guide according to another usage example in the projection device according to the twelfth embodiment.
FIG. 37 is a perspective view of a light guide according to still another usage example in the projection device according to the twelfth embodiment.
FIG. 38 is a cross-sectional view of a light guide, in which a masking layer is added, in the projection device according to the twelfth embodiment.
FIG. 39 is a view illustrating a relationship between the light guide and the light source unit in the projection device according to the twelfth embodiment.
FIG. 40 is a view of a projection device according to a thirteenth embodiment.

### [Modes of the Invention]

Hereinafter, exemplary embodiments of the present invention will be described in detail with reference to the accompanying drawings.

However, the technical spirit of the present invention is not limited to some embodiments which will be described and may be implemented in various forms, and one or more elements in the embodiments may be selectively combined and replaced to be used within the scope of the technical spirit of the present invention.

Further, the terms used in the embodiments of the present invention (including technical and scientific terms), may be interpreted with meanings that are generally understood by those skilled in the art unless particularly defined and described, and terms which are generally used, such as terms defined in a dictionary, may be understood in consideration of their contextual meanings in the related art.

Further, the terms used in the embodiments of the present invention are provided only to describe embodiments of the present invention and not for purposes of limitation.

In the present specification, unless clearly indicated otherwise by the context, singular forms include the plural forms thereof, and in a case in which "at least one (or one or more) among A, B, and C" is described, this may include at least one combination among all combinations which can be combined with A, B, and C.

In addition, terms such as first, second, A, B, (a), (b), and the like may be used to describe components of the embodiments of the present invention.

These terms are only provided to distinguish the components from other components, and the essence, sequence, order, or the like of the components are not limited by the terms.

In addition, when a component is described as being "connected," "coupled," or "linked" to another component, the component may include not only a case of being directly connected, coupled, or linked to another component but also a case of being connected, coupled, or linked to another element by still another component between the component and another component.

Further, when a component is described as being formed "on (above)" or "under (below)" another component, the term "on (above)" or "under (below)" includes both of a case in which two components are in direct contact with each other or a case in which one or more components are (indirectly) disposed between two components. In addition, when a component is described as being disposed "on or under" another component, such a description may include a case in which the component is disposed at an upper side or a lower side with respect to another component.

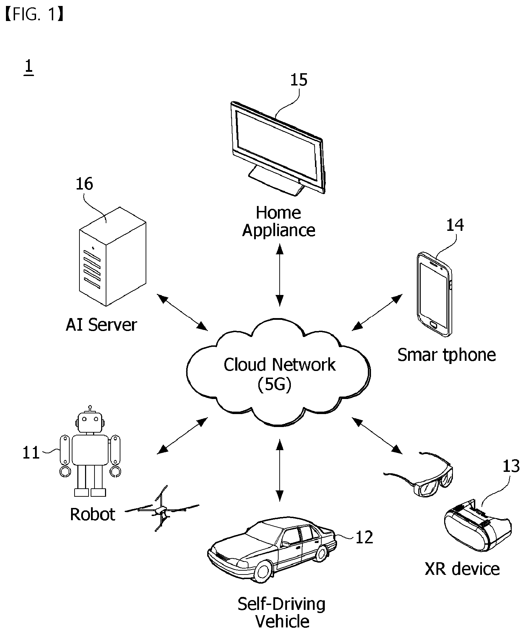

FIG. 1 is a conceptual diagram illustrating an embodiment of an artificial intelligence (AI) device.

Referring to FIG. 1, in an AI system, at least one of an AI server 16, a robot 11, an autonomous vehicle 12, an extended reality (XR) device 13, a smartphone 14, and home appliances 15 is connected to a cloud network 10. Here, the robot 11, the autonomous vehicle 12, the XR device 13, the smartphone 14, the home appliances 15, and the like to which an AI technology is applied may be referred to as AI devices 11 to 15.

The cloud network 10 may constitute a part of a cloud computing infrastructure or may mean a network present within the cloud computing infrastructure. Here, the cloud network 10 may be configured using a 3G network, a 4G or long term evolution (LTE) network, a 5G network, or the like.

That is, the devices 11 to 16 constituting the AI system may be interconnected through the cloud network 10. In particular, the devices 11 to 16 may communicate with each other through a base station, but may directly communicate with each other without going through the base station.

The AI server 16 may include a server configured to perform AI processing and a server configured to perform calculation on big data.

The AI server 16 is connected to at least one of the robot 11, the autonomous vehicle 12, the XR device 13, the smartphone 14, and the home appliances 15, that are AI devices constituting the AI system, through the cloud network 10, and may help at least some of the AI processing of the connected AI devices 11 to 15.

In this case, the AI server 16 may train an artificial neural network based on a machine learning algorithm instead of the AI devices 11 to 15, and may directly store a learning model or transmit the learning model to the AI devices 11 to 15.

In this case, the AI server 16 may receive input data from the AI devices 11 to 15, may infer a result value of the received input data using the learning model, may generate a response or a control command based on the inferred result value, and may transmit the response or control command to the AI devices 11 to 15.

Alternatively, the AI devices 11 to 15 may directly infer a result value of input data using a learning model, and may generate a response or a control command based on the inferred result value.

### <AI+Robot>

An AI technology is applied to the robot 11, and the robot 11 may be implemented as a guide robot, a transport robot, a cleaning robot, a wearable robot, an entertainment robot, a pet robot, an unmanned flying robot, and the like.

The robot 11 may include a robot control module for controlling an operation, and the robot control module may mean a software module or a chip in which the software module is implemented as hardware.

The robot 11 may obtain state information of the robot 11, may detect (recognize) a surrounding environment and an object, may generate map data, may determine a moving path and a driving plan, may determine a response to a user interaction, or may determine an operation using sensor information obtained from various types of sensors.

Here, the robot 11 may use sensor information obtained by at least one sensor of a LiDAR, a radar, and a camera in order to determine the moving path and the driving plan.

The robot 11 may perform the above-described operations using a learning model configured with at least one artificial neural network. For example, the robot 11 may recognize a surrounding environment and an object using a learning model, and may determine an operation using recognized surrounding environment information or object information. Here, the learning model may be directly trained in the robot 11 or may be trained in an external device, such as the AI server 16.

In this case, the robot 11 may directly generate results using the learning model and perform an operation, but may perform an operation by transmitting sensor information to an external device, such as the AI server 16, and receiving results generated in response thereto.

The robot 11 may determine a moving path and a driving plan using at least one of map data, object information detected from sensor information, and object information obtained from an external device, and drive along the determined moving path and driving plan by controlling a driving unit.

The map data may include object identification information for various objects disposed in a space in which the robot 11 moves. For example, the map data may include object identification information for fixed objects, such as a wall and a door, and movable objects, such as a flowerpot and a desk. In addition, the object identification information may include a name, a type, a distance, a position, and the like.

Further, the robot 11 may perform an operation or drive by controlling the driving unit based on a user's control/interaction. In this case, the robot 11 may obtain intention information of an interaction according to a user's behavior or voice utterance, may determine a response based on the obtained intention information, and may perform an operation.

### <AI+Autonomous Driving>

An AI technology is applied to the autonomous vehicle 12, and the autonomous vehicle 12 may be implemented as a movable type robot, a vehicle, an unmanned aerial vehicle, or the like.

The autonomous vehicle 12 may include an autonomous driving control module for controlling an autonomous driving function, and the autonomous driving control module may mean a software module or a chip in which the software module is implemented as hardware. The autonomous driving control module may be included in the autonomous vehicle 12 as a component of the autonomous vehicle 12, but may be configured as separate hardware outside the autonomous vehicle 12 and connected to the autonomous vehicle 12.

The autonomous vehicle 12 may obtain state information of the autonomous vehicle 12, may detect (recognize) a surrounding environment and an object, may generate map data, may determine a moving path and a driving plan, or may determine an operation using sensor information obtained from various types of sensors.

Here, in order to determine the moving path and the driving plan, the autonomous vehicle 12, like the robot 11, may use sensor information obtained from at least one sensor among a LiDAR, a radar, and a camera.

In particular, the autonomous vehicle 12 may recognize an environment or object in an area whose view is blocked or an area of a given distance or more by receiving sensor information for the environment or object from external devices, or may directly receive recognized information for the environment or object from external devices.

The autonomous vehicle 12 may perform the above-described operations using a learning model configured with at least one artificial neural network. For example, the autonomous vehicle 12 may recognize a surrounding environment and an object using a learning model, and may determine a driving route using recognized surrounding environment information or object information. Here, the learning model may have been directly trained in the autonomous vehicle 12 or may have been trained in an external device, such as the AI server 16.

In this case, the autonomous vehicle 12 may directly generate results using the learning model and perform an operation, but may perform an operation by transmitting sensor information to an external device, such as the AI server 16, and receiving results generated in response thereto.

The autonomous vehicle 12 may determine a moving path and a driving plan using at least one of map data, object information detected from sensor information, and object information obtained from an external device, and may drive based on the determined moving path and driving plan by controlling the driving unit.

The map data may include object identification information for various objects disposed in a space (e.g., road) in which the autonomous vehicle 12 drives. For example, the map data may include object identification information for fixed objects, such as a street light, a rock, and a building, or the like, and movable objects, such as a vehicle and a pedestrian. In addition, the object identification information may include a name, a type, a distance, a position, and the like.

Further, the autonomous vehicle 12 may perform an operation or may drive by controlling the driving unit based on a user's control/interaction. In this case, the autonomous vehicle 12 may obtain intention information of an interaction according to a user' behavior or voice utterance, may determine a response based on the obtained intention information, and may perform an operation.

### <AI+XR>

An AI technology is applied to the XR device 13, and the XR device 13 may be implemented as a head-mount display (HMD), a head-up display (HUD) provided in a vehicle, a television, a mobile phone, a smartphone, a computer, a wearable device, home appliances, a digital signage, a vehicle, a fixed type robot, or a movable type robot.

The XR device 13 may generate position data and attribute data for three-dimensional points by analyzing three-dimensional point cloud data or image data obtained through various sensors or from an external device, may obtain information on a surrounding space or real object based on the generated position data and attribute data, and may output an XR object by rendering the XR object. For example, the XR device 13 may output an XR object, including additional information for a recognized object, by corresponding the XR object to the recognized object.

The XR device 13 may perform the above operations using a learning model configured with at least one artificial neural network. For example, the XR device 13 may recognize a real object in three-dimensional point cloud data or image data using a learning model, and may provide information corresponding to the recognized real object. Here, the learning model may have been directly trained in the XR device 13 or may have been trained in an external device, such as the AI server 16.

In this case, the XR device 13 may directly generate results using a learning model and perform an operation, but may perform an operation by transmitting sensor information to an external device, such as the AI server 16, and receiving results generated in response thereto.

### <AI+Robot+Autonomous Driving>

An AI technology and an autonomous driving technology are applied to the robot 11, and the robot 11 may be implemented as a guide robot, a transport robot, a cleaning robot, a wearable robot, an entertainment robot, a pet robot, an unmanned flying robot, or the like.

The robot 11 to which the AI technology and the autonomous driving technology have been applied may mean a robot itself having an autonomous driving function or may mean the robot 11 interacting with the autonomous vehicle 12.

The robot 11 having the autonomous driving function may collectively refer to devices that autonomously move along a given route without control of a user or autonomously determine a route and move.

The robot 11 and the autonomous vehicle 12 having the autonomous driving function may use a common sensing method in order to determine one or more of a moving path or a driving plan. For example, the robot 11 and the autonomous vehicle 12 having the autonomous driving function may determine one or more of a moving path or a driving plan using information sensed through a LiDAR, a radar, a camera, or the like.

The robot 11 interacting with the autonomous vehicle 12 is present separately from the autonomous vehicle 12, and may perform an operation associated with an autonomous driving function inside or outside the autonomous vehicle 12 or associated with a user got in the autonomous vehicle 12.

In this case, the robot 11 interacting with the autonomous vehicle 12 may control or assist the autonomous driving function of the autonomous vehicle 12 by obtaining sensor information in place of the autonomous vehicle 12 and providing the sensor information to the autonomous vehicle 12, or by obtaining sensor information, generating surrounding environment information or object information, and providing the surrounding environment information or object information to the autonomous vehicle 12.

Alternatively, the robot 11 interacting with the autonomous vehicle 12 may control the function of the autonomous vehicle 12 by monitoring a user got in the autonomous vehicle 12 or through an interaction with a user. For example, when a driver is determined to be a drowsiness state, the robot 11 may activate the autonomous driving function of the autonomous vehicle 12 or assist control of the driving unit of the autonomous vehicle 12. In this case, the function of the autonomous vehicle 12 controlled by the robot 11 may include a function provided by a navigation system or audio system provided within the autonomous vehicle 12, in addition to an autonomous driving function simply.

Alternatively, the robot 11 interacting with the autonomous vehicle 12 may provide information to the autonomous vehicle 12 or may assist a function outside the autonomous vehicle 12. For example, the robot 11 may provide traffic information, including signal information, to the autonomous vehicle 12, as in a smart traffic light, and may also interact with the autonomous vehicle 12, as in an automatic electric charger for electric vehicles, to automatically connect an electric charger to the charging port.

### <AI+Robot+XR>

An AI technology and an XR technology are applied to the robot 11, and the robot 11 may be implemented as a guide robot, a transport robot, a cleaning robot, a wearable robot, an entertainment robot, a pet robot, an unmanned flying robot, a drone, or the like.

The robot 11 to which the XR technology has been applied may mean a robot, that is, a target of control/interaction within an XR image. In this case, the robot 11 is different from the XR device 13 and they may operate in conjunction with each other.

When the robot 11, that is, a target of control/interaction within an XR image, obtains sensor information from sensors including a camera, the robot 11 or the XR device 13 may generate an XR image based on the sensor information, and the XR device 13 may output the generated XR image. In addition, the robot 11 may operate based on a control signal received through the XR device 13 or a user's interaction.

For example, a user may identify XR images corresponding to the perspective of the robot 11, which is remotely connected through an external device such as the XR device 13, and may adjust the autonomous driving path of the robot 11 through an interaction, may control an operation or driving, or may identify information of a surrounding object.

### <AI+Autonomous Driving+XR>

An AI technology and an XR technology are applied to the autonomous vehicle 12, and the autonomous vehicle 12 may be implemented as a movable type robot, a vehicle, an unmanned aerial vehicle, or the like.

The autonomous vehicle 12 to which the XR technology has been applied may mean an autonomous vehicle equipped with means for providing an XR image or an autonomous vehicle, that is, a target of control/interaction within an XR image. In particular, the autonomous vehicle 12, that is, a target of control/interaction within an XR image, is different from the XR device 13, and they may operate in conjunction with each other.

The autonomous vehicle 12 equipped with a means for providing an XR image may obtain sensor information from sensors including a camera, and may output an XR image generated based on the obtained sensor information. For example, the autonomous vehicle 12 includes an HUD, and may provide a passenger with an XR object corresponding to a real object or an object within a screen by outputting an XR image.

In this case, when the XR object is output to the HUD, at least a portion of the XR object may be output so as to overlap with a real object toward which a passenger's gaze is directed. On the other hand, when the XR object is output on a display included in the autonomous vehicle 12, at least a portion of the XR object may be output to overlap with an object within the screen. For example, the autonomous vehicle 12 may output XR objects corresponding to objects, such as a carriageway, another vehicle, a traffic light, a traffic sign, a two-wheeled vehicle, a pedestrian, and a building.

When the autonomous vehicle 12, that is, a target of control/interaction within an XR image, obtains sensor information from sensors including a camera, the autonomous vehicle 12 or the XR device 13 may generate an XR image based on the sensor information, and the XR device 13 may output the generated XR image. In addition, the autonomous vehicle 12 may operate based on a control signal received through an external device, such as the XR device 13, or a user's interaction.

### [Extended Reality Technology]

Extended reality (XR) collectively refers to virtual reality (VR), augmented reality (AR), and mixed reality (MR). A VR technology provides an object or background of the real world as a computer graphic (CG) image only. An AR technology provides a virtually produced CG image on an actual thing image. An MR technology is a computer graphics technology for mixing and combining virtual objects with the real world and providing them.

The MR technology is similar to the AR technology in that both display real and virtual objects. However, while in the AR technology, a virtual object is used in a form to supplement a real object, in the MR technology, unlike in the AR technology, a virtual object and a real object are used as the same character.

The XR technology may be applied to an HMD, an HUD, a mobile phone, a tablet PC, a laptop, a desktop, TV, a digital signage, or the like, and a device to which the XR technology has been applied may be referred to as an XR device.

Hereinafter, an electronic device that provides extended reality according to an embodiment of the present invention will be described. In particular, a projection device applied to augmented reality and an electronic device including the same will be described in detail.

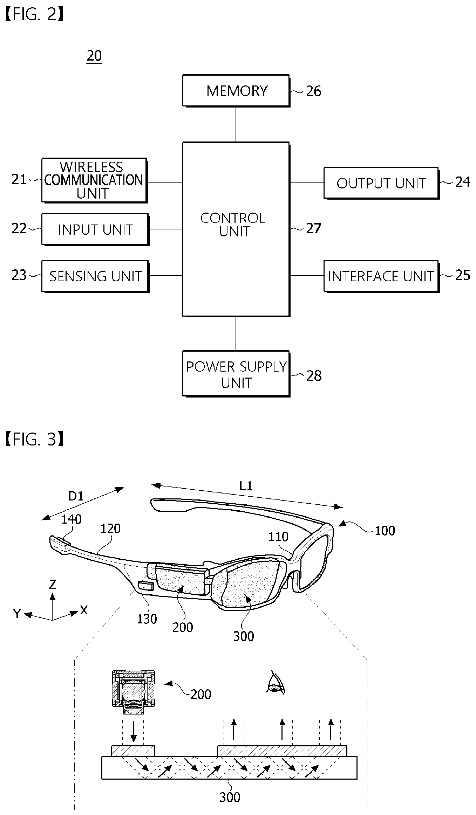

FIG. 2 is a block diagram illustrating a configuration of an extended reality electronic device 20 according to an embodiment of the present invention.

Referring to FIG. 2, the extended reality electronic device 20 may include a wireless communication unit 21, an input unit 22, a sensing unit 23, an output unit 24, an interface unit 25, a memory 26, a control unit 27, a power supply unit 28, and the like. It is understood that implementing all the components illustrated in FIG. 2 is not a requirement for the electronic device 20, and that the electronic device 20 described in the present specification may alternatively be implemented by more or fewer components.

More specifically, among the above components, the wireless communication unit 21 may include one or more modules that allow wireless communication between the electronic device 20 and a wireless communication system, between the electronic device 20 and another electronic device, or between the electronic device 20 and an external server. Further, the wireless communication unit 21 may include one or more modules that connect the electronic device 20 to one or more networks.

The wireless communication unit 21 may include at least one of a broadcast receiving module, a mobile communication module, a wireless Internet module, a short-range communication module, and a position information module.

The input unit 22 may include a camera or an image input unit for receiving image signals, a microphone or an audio input unit for receiving audio signals, or a user input unit, for example, touch keys, push keys (mechanical keys), or the like for receiving information from the user. Audio data or image data obtained by the input unit 22 may be analyzed and processed by user control commands.

The sensing unit 23 may include one or more sensors for sensing at least one of internal information of the electronic device 20, information about a surrounding environment of the electronic device 20, and user information.

For example, the sensing unit 23 may include at least one of a proximity sensor, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., a capturing device), a microphone, a battery gauge, an environmental sensor (e.g., a barometer, a hygrometer, a thermometer, a radiation detection sensor, a thermal sensor, a gas sensor, or the like), and a chemical sensor (e.g., an electronic nose, a health care sensor, a biometric sensor, or the like). Meanwhile, the electronic device 20 described in the present specification may combine and utilize information obtained from at least two or more of these sensors.

The output unit 24 may be configured to output various types of information related to vision, hearing, or tactile sensations, and may include at least one of a display unit, an audio output unit, a haptic module, or an optical output unit. The display unit may have an inter-layered structure or an integrated structure with a touch sensor to implement a touch screen. The touch screen may provide an output interface between the augmented reality electronic device 20 and the user, as well as function as a user input unit that provides an input interface between the augmented reality electronic device 20 and the user.

The interface unit 25 serves as an interface with various types of external devices that are connected to the electronic device 20. Through the interface unit 25, the electronic device 20 may receive virtual reality or augmented reality content from an external device, and perform mutual interaction by exchanging various input signals, sensing signals, and data.

For example, the interface unit 25 may include at least one of wired/wireless headset ports, external charger ports, wired/wireless data ports, memory card ports, ports for connecting a device having an identification module, audio input/output (I/O) ports, video input/output (I/O) ports, and earphone ports.

Further, the memory 26 stores data supporting various functions of the electronic device 20. The memory 26 may store a plurality of application programs or applications executed in the electronic device 20, and pieces of data or instructions for operations of the electronic device 20. At least some of these application programs may be downloaded from an external server via wireless communication. Further, at least some of these application programs may be present on the electronic device 20 at the time of shipment, which is typically the case for basic functions (e.g., receiving a call, placing a call, receiving a message, sending a message, and the like) of the electronic device 20.

The control unit 27 controls overall operations of the electronic device 20, in addition to the operations related to the application programs. The control unit 27 may process signals, data, information, and the like, which are input or output by the components described above.

In addition, the control unit 27 may execute an application stored in the memory 26 to control at least some of the components and provide appropriate information to the user or process functions. Furthermore, the control unit 27 may operate by combining at least two or more components included in the electronic device 20 to execute the application.

In addition, the control unit 27 may detect the movement of the electronic device 20 or the user by using a gyroscope sensor, a gravity sensor, a motion sensor, and the like included in the sensing unit 23. Alternatively, the control unit 27 may detect objects approaching the electronic device 20 or the user by using sensors such as a proximity sensor, a light sensor, a magnetic sensor, an infrared sensor, an ultrasonic sensor, or an optical sensor included in the sensing unit 23. In addition, the control unit 27 may also detect the movement of the user through sensors provided in a controller that operates in conjunction with the electronic device 20.

Further, the control unit 27 may perform operations or functions of the electronic device 20 using the application programs stored in the memory 26.

The power supply unit 28 receives external power and internal power and supplies power to the respective components included in the electronic device 20 under the control of the control unit 27. The power supply unit 28 includes a battery, which may be provided in \a built-in or replaceable form.

At least some of the respective components may operate in cooperation with one another to implement the operation, control, or control method of the electronic device according to various embodiments described below. Further, the operation, control, or control method of the electronic device according to various embodiments may be implemented on the electronic device by an execution of at least one application program stored in the memory 26.

Hereinafter, the electronic device described as an example of the present invention will be described based on an embodiment applied to HMDs. However, the embodiments of the electronic device according to the present invention may also include devices such as mobile phones, smart phones, laptop computers, terminals for digital broadcasting, personal digital assistants (PDAs), portable multimedia players (PMPs), navigation systems, slate personal computers (PCs), tablet PCs, ultra books, and wearable devices. The wearable devices may include, in addition to the HMDs, watch-type terminals (smartwatches), contact lenses, VR/AR/MR glasses, and the like.

FIG. 3 is a perspective view of an augmented reality electronic device according to an embodiment of the present invention.

As shown in FIG. 3, the electronic device according to the embodiment of the present invention may include a frame 100, a projection device 200, and a display unit 300.

The electronic device may be provided as a glass type (smart glass). The glass-type electronic device may be configured to be worn on the head of the human body and may include the frame (a case, a housing, or the like) 100 therefor. The frame 100 may be formed of a flexible material to facilitate wearing.

The frame 100 is supported on the head and has a space on which various components are mounted. As illustrated in the drawing, electronic components such as the projection device 200, a user input unit 130, or an audio output unit 140 may be mounted on the frame 100. In addition, a lens covering at least one of a left eye and a right eye may be detachably mounted on the frame 100.

As illustrated in the drawing, the frame 100 may have a form of glasses worn on a face in the human body of a user, but the present invention is not necessarily limited thereto, and the frame 100 may have a form such as goggles or the like, which are worn in close contact with the face of the user.

The frame 100 may include a front frame 110 having at least one opening and a pair of side frames 120 that extend in a y-direction (based on FIG. 3) intersecting the front frame 110 and are parallel to each other.

The frame 100 may have a length DI in the x-direction and a length LI in the y-direction, which may be the same as or different from each other.

The projection device 200 is provided to control various electronic components provided in the electronic device. The projection device 200 may be used interchangeably with a "light output device," a "light projection device," a "light irradiation device," an "optical device," and the like.

The projection device 200 may generate an image to be shown to the user or a video in which images are continued. The projection device 200 may include an image source panel that generates an image and a plurality of lenses that diffuses and converges light generated from the image source panel.

The projection device 200 may be fixed to any one side frame 120 of two side frames 120. For example, the projection device 200 may be fixed to an inside or an outside of any one side frame 120 or embedded and integrally formed in any one side frame 120. Alternatively, the projection device 200 may be fixed to the front frame 110 or provided separately from the electronic device.

The display unit 300 may be implemented in the form of an HMD. The HMD form refers to a display scheme that is mounted on the head and displays a video directly in front of the user's eye. When the user wears the electronic device, the display unit 300 may be disposed to correspond to at least one of the left eye and the right eye so as to provide the video directly in front of the user's eye. In this drawing, it is illustrated that the display unit 300 is located at a part corresponding to the right eye so as to output the video toward the right eye of the user. However, as described above, the display unit 300 is not thereto and may be deposed on both the left and right eyes.

The display unit 300 may allow the image generated by the projection device 200 to be displayed to the user while the user visually recognizes an external environment. For example, the display unit 300 may project the image to a display area using a prism.

In addition, the display unit 300 may be formed to be light-transmitting so that the projected image and a general field of view (a range visible to the user through their eyes) may be seen at the same time. For example, the display unit 300 may be semi-transparent and may be formed by an optical element including glass.

In addition, the display unit 300 may be inserted into and fixed to the opening included in the front frame 110 or located on a rear surface (i.e., between the opening and the user) of the opening to be fixed to the front frame 110. In the drawing, a case in which the display unit 300 is located on the rear surface of the opening and fixed to the front frame 110 is illustrated as an example, but unlike this, the display unit 300 may be disposed and fixed at various positions of the frame 100.

As shown in FIG. 3, in the electronic device, when image light for the image is incident on one side of the display unit 300 by the projection device 200, the image light is emitted to the other side through the display unit 300 to show the image generated by the projection device 200 to the user.

As a result, the user may view the image generated by the projection device 200 simultaneously while viewing the external environment through the opening of the frame 100. That is, the video output through the display unit 300 may appear to overlap with the general field of view. The electronic device may provide augmented reality (AR) in which a virtual image overlaps with an image or background of reality using the characteristics of the display to show one image.

Furthermore, in addition to the above operation, the external environment and the image generated by the projection device 200 may be provided to the user with a time difference within a short period of time that is not perceivable by the human. For example, within a single frame, the external environment may be provided to the user during one section, while the video from the projection device 200 may be provided to the user during another section.

Alternatively, both overlap and time difference may be provided.

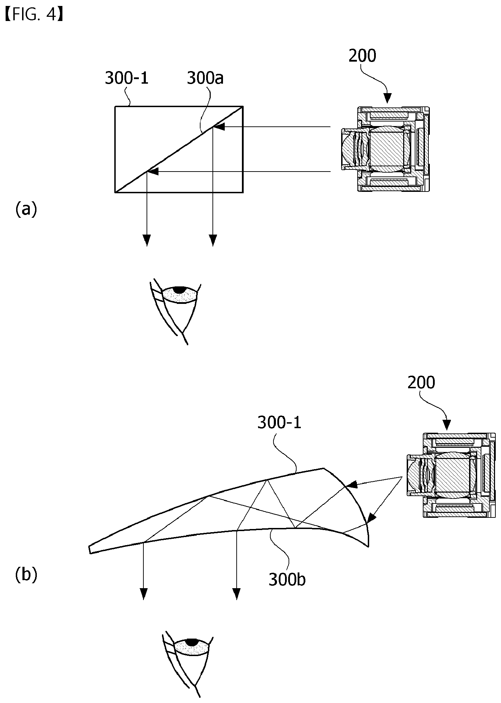

FIGS. 4 to 6 are conceptual diagrams for describing various display methods applicable to the display unit according to the embodiment of the present invention.

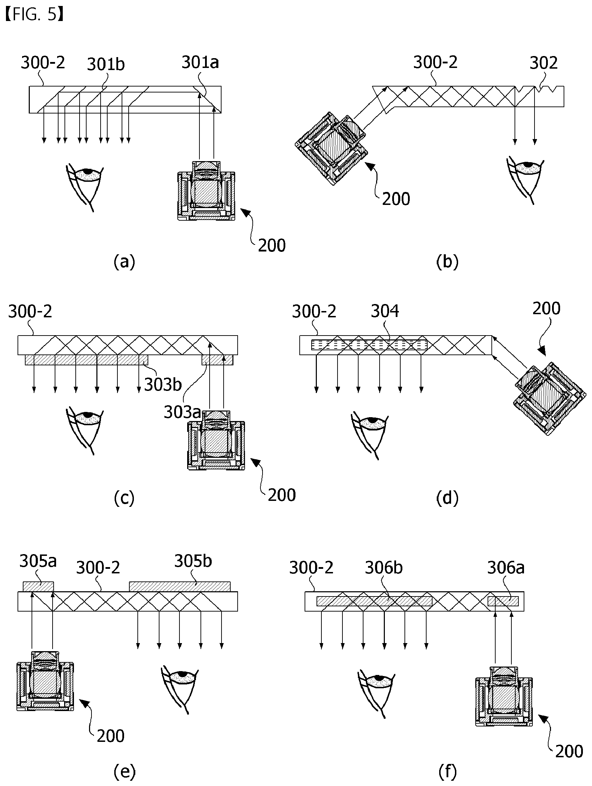

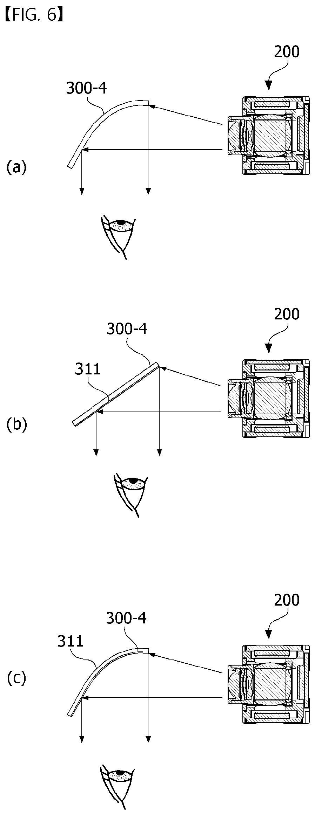

Specifically, FIG. 4 is a diagram for describing an embodiment of a prism-type optical element, FIG. 5 is a diagram for describing an embodiment of a waveguide-type optical element, and FIG. 6 is a drawing for describing an embodiment of a surface reflection-type optical element.

As shown in FIG. 4, a prism-type optical element may be used in a display unit 300-1 according to the embodiment of the present invention.

In an embodiment, as shown in FIG. 4A, the prism-type optical element may use a flat-type glass optical element in which a surface 300a on which image light is incident and from which the image light is emitted is planar, or as shown in FIG. 4B, the prism-type optical element may use a freeform glass optical element in which a surface 300b from which the image light is emitted is formed as a curved surface without a constant radius of curvature.

The flat-type glass optical element may receive image light generated by the projection device 200 through a flat side surface, reflect the received image light by using a total reflection mirror 300a installed therein, and emit the reflected image light toward a user. Here, the total reflection mirror 300a provided inside the flat-type glass optical element may be formed inside the flat-type glass optical element by laser light.

The freeform glass optical element is formed so that a thickness thereof decreases as a distance from the surface on which light is incident increases, receives image light generated by the projection device 200 through the side with a curved surface, totally reflects the received image light internally, and emits the reflected light toward a user.

As shown in FIG. 5, a waveguide-type optical element or light guide optical element (LOE) may be used in a display unit 300-2 according to another embodiment of the present invention.

In an embodiment, the waveguide or light guide-type optical element may be implemented by using a segmented beam splitter-type glass optical element as shown in FIG. 5A, a saw tooth prism-type glass optical element as shown in FIG. 5B, a glass optical element having a diffractive optical element (DOE) as shown in FIG. 5C, a glass optical element having a hologram optical element (HOE) as shown in FIG. 5D, a glass optical element having a passive grating as shown in FIG. 5E, and a glass optical element having an active grating as shown in FIG. 5F.

As shown in FIG. 5A, the segmented beam splitter-type glass optical element may include a total reflection mirror 301a on a part, on which an optical image is incident, and a segmented beam splitter 301b on a part, from which the optical image is emitted, inside the glass optical element.

Accordingly, the optical image generated by the projection device 200 is totally reflected by the total reflection mirror 301a inside the glass optical element, and the totally reflected optical image is partially separated and emitted by the segmented beam splitter 301b and eventually perceived by the user's vision while being guided in a longitudinal direction of the glass.

In the saw tooth prism-type glass optical element as shown in FIG. 5B, the optical image generated by the projection device 200 is incident on a side surface of the glass in an oblique direction and totally reflected into the inside of the glass, emitted to the outside of the glass by a saw tooth-shaped uneven structure 302 formed in a part from which the optical image is emitted, and eventually perceived by the user's vision.

The glass optical element having a diffractive optical element (DOE) as shown in FIG. 5C may have a first diffraction unit 303a on a surface of a part on which the optical image is incident and a second diffraction unit 303b on a surface of a part from which the optical image is emitted. The first and second diffraction units 303a and 303b may be provided in a manner that a specific pattern is patterned on the surface of the glass or a separate diffraction film is attached thereon.

Accordingly, the optical image generated by the projection device 200 is diffracted as it is incident through the first diffraction unit 303a, guided along the longitudinal direction of the glass while being totally reflected, emitted through the second diffraction unit 303b, and eventually perceived by the user's vision.

The glass optical element having a hologram optical element (HOE) as shown in FIG. 5D may have an out-coupler 304 inside the glass from which the optical image is emitted. Accordingly, the optical image is incident from the projection device 200 in the oblique direction through a side surface of the glass, guided in the longitudinal direction of the glass by being totally reflected, emitted by the out-coupler 304, and eventually perceived by the user's vision. The structure of the HOE may be modified gradually to be further divided into a structure having a passive grating and a structure having an active grating.

The glass optical element having a passive grating as shown in FIG. 5E may have an in-coupler 305a on the opposite surface of a glass surface on which the optical image is incident and an out-coupler 305b on the opposite surface of the glass surface from which the optical image is emitted. Here, the in-coupler 305a and the out-coupler 305b may be provided in the form of a film having a passive grating.

Accordingly, the optical image incident on the glass surface at the light-incident side of the glass is totally reflected by the in-coupler 305a provided on the opposite surface, guided in the longitudinal direction of the glass, emitted through the opposite surface of the glass by the out-coupler 305b, and eventually perceived by the user's vision.

The glass optical element having an active grating as shown in FIG. 5F may have an in-coupler 306a formed as an active grating inside the glass through which an optical image is incident and an out-coupler 306b formed as an active grating inside the glass from which the optical image is emitted.

Accordingly, the optical image incident on the glass is totally reflected by the in-coupler 306a, guided in the longitudinal direction of the glass, emitted to the outside of the glass by the out-coupler 306b, and eventually perceived by the user's vision.

A pin mirror-type optical element may be used in a display unit according to a modified example.

Further, the surface reflection-type optical element based on a freeform combiner method as shown in FIG. 6A may use freeform combiner glass, for which a plurality of flat surfaces having different incidence angles for an optical image are combined to form one glass with a curved surface as a whole to perform the role of a combiner. Such a freeform combiner glass 300 allows an optical image to be incident at different angles depending on the area and to be emitted toward the user.

The surface reflection-type optical element based on a Flat hologram optical element (HOE) method as shown in FIG. 6B may have a hologram optical element (HOE) 311 coated or patterned on the surface of flat glass, in which an optical image emitted by the projection device 200 passes through the HOE 311, reflects from the surface of the glass, again passes through the HOE 311, and is eventually emitted toward the user.

The surface reflection-type optical element based on the freeform HOE method as shown in FIG. 6C may have a HOE 313 coated or patterned on the surface of freeform glass, and operating principles may be the same as described with reference to FIG. 6B.

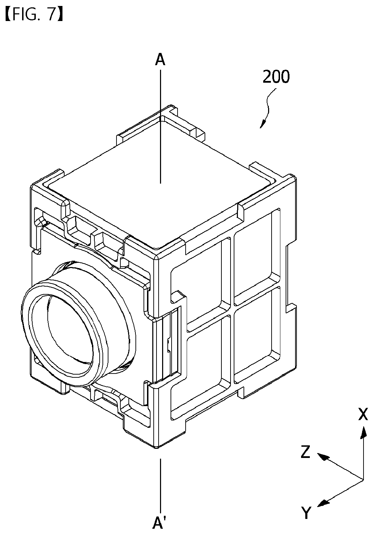

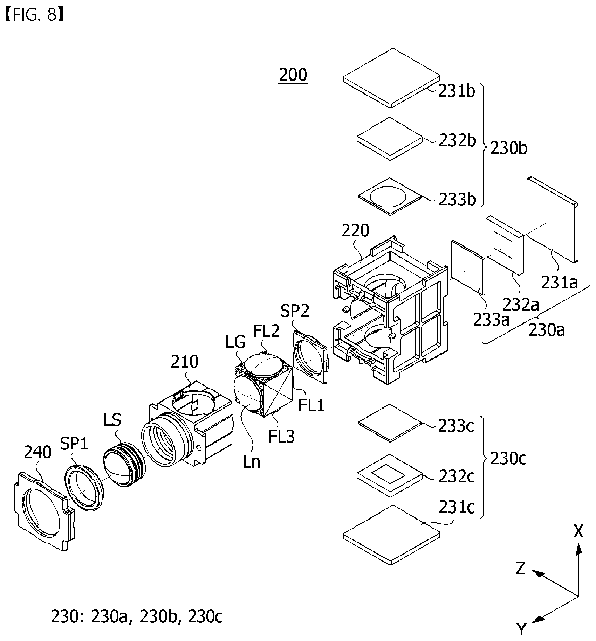

FIG. 7 is a perspective view of the projection device according to one embodiment, and FIG. 8 is an exploded perspective view of the projection device according to one embodiment.

Referring to FIGS. 7 and 8, the projection device 200 according to one embodiment may include a lens group LS, a barrel 210, a housing 220, a light source unit 230, a light guide LG, lenses FL, and an additional housing 240. In addition, the projection device 200 may include a first spacer SP1 and a second spacer SP2.

First, the lens group LS may also be referred to as an outer lens. The lens group LS may be inserted into the barrel 210. That is, the barrel 210 is located on an inner side of the projection device 200 and may accommodate the lens group LS. In addition, the barrel 210 may accommodate the light guide LG, the lenses LF, the first spacer PS1, and the second spacer SP2.

The barrel 210 may have a space to accommodate the above-described components or additional optical elements. For example, the barrel 210 may include a first groove and a second groove, which will be described below. The lens group LS may be disposed in the first groove. In addition, the light guide LG may be disposed in the second groove. Further, the first groove and the second groove in the barrel 210 may be disposed to be spaced apart from each other. That is, the barrel 210 has spaces (e.g., grooves) in which the lens group LS and the light guide LG are disposed, and these spaces may be separated or spaced apart from each other. Accordingly, the insertion or coupling of the light guide with the lens group may be facilitated.

In contrast, when the spaces are interconnected, miniaturization of the projection device may be achieved.

The lens group LS may be accommodated in the barrel 210, and the first spacer SP1 may be located on an outer side of the lens group LS. The first spacer SP1 may be disposed on the outer side of the lens group LS, which is accommodated in the first groove of the barrel 210, to prevent the lens group LS from detaching.

The barrel 210 may include a plurality of holes connected to the second groove. The plurality of holes may be located in side surfaces of the barrel 210. Accordingly, light emitted from the light source unit 230 to be described below may be incident on the light guide LG. Furthermore, the light incident on the light guide LG may be reflected and pass through or be transmitted through the lens group LS to be provided to the above-described waveguide. To this end, the first groove and the second groove may be connected to each other through a through hole. That is, the light reflected by the light guide LG in the second groove may be provided to the lens group LS of the first groove via the through hole. In addition, as described above, the light from the light source unit 230 may be emitted to the light guide LG inside the barrel 210 through the plurality of holes disposed in the side surfaces of the barrel 210.

The light guide LG may be located in the barrel 210. The light guide LG may be connected to the lenses FL to be described below.

The light guide LG may be provided as at least one prism. For example, the light guide LG may be formed by coupling or joining a plurality of prisms. The light guide LG1 may include a prism. The prism serves as a reflective member and may, for example, include an X-prism. In an embodiment, the light guide LG may have a structure in which at least two or more prisms are combined. For example, the light guide LG may have a structure in which four prisms are combined. In addition, the light guide LG may be a non-polarizing prism. That is, the light guide LG may not perform polarization on light emitted from light sources 232a, 232b, and 232c.

The light guide LG may include at least two or more coated surfaces (reflective members or reflective sheets). One of the at least two or more coated surfaces may reflect light of a first wavelength and light of a second wavelength, and transmit light of a third wavelength. That is, the coated surface may reflect light of a predetermined wavelength band. Accordingly, for light emitted from each of the plurality of light sources 232a, 232b, and 232c, light within a desired wavelength band may be reflected in the light guide LG. For example, the light after passing through the light guide LG may be provided to the lens group LS.

The lens FL may be connected to the light guide LG. The lens FL may be disposed adjacent to the light guide LG. For example, the lens FL may be in contact with the light guide. That is, the lens FL may be in contact with the light guide LG. Further, the light guide LG may be in contact with the lens FL.

In addition, the lens FL may be coupled to the light guide LG. In this case, the lens FL may be coupled to the light guide LG through a bonding member or coupling member. The bonding member or coupling member may be located between the lens FL and the light guide LG.

The lens FL is located on an outer surface of the light guide LG, and may be provided as at least one or more lenses. For example, the number of lenses FL may correspond to the number of light sources in the light source unit 230 to be described below. When the number of light sources is three, the number of lenses FL may also be three.

For example, the lenses FL may include a first lens, a second lens, and a third lens corresponding to the light sources. The first lens may correspond to a first light source unit. The second lens may correspond to a second light source unit. The third lens may correspond to a third light source. That is, the first to third lenses may receive light emitted from the first to third light source units, respectively.

The second spacer SP2 may be located in the barrel 210. For example, the second spacer SP2 may be larger in size than the light guide LG or the lens FL. The second spacer SP2 may be disposed on outer sides of the light guide LG and the lens FL. Thus, the light guide LG and the lens FL may not be detached from the barrel 210. In other words, the second spacer SP2 may prevent the light guide LG and the lens FL from being separated from the barrel 210.

The housing 220 may be located on an outer side of the barrel 210. The housing 220 may surround the barrel 210. For example, the housing 220 may be disposed to surround at least one area of the barrel 210. Furthermore, the housing 220 may include a space for accommodating the light source. In addition, the housing 220 may include at least one housing hole. The light source may be disposed in the housing hole. In addition, light emitted from the light source may be provided to the lens FL and the light guide LG through at least one housing hole. The housing 220 may be disposed on the outer side of the barrel 210 and include a space for accommodating the barrel 210 and the light source unit 230.

The light source unit 230 may be provided as at least one or more light source units. As described above, the following description will be provided based on three light source units. The light source units 230 may include a first light source unit 230a, a second light source unit 230b, and a third light source unit 230c.

The first light source unit 230a may overlap the lens group LS in a second direction (Y-axis direction). The second direction (Y-axis direction) may correspond to a direction of light emitted from the projection device 200. That is, the second direction (Y-axis direction) may correspond to a direction in which the light emitted from a light source device or the light source unit 230 is reflected by the light guide LG and emitted to the above-described display unit.

The second light source unit 230b and the third light source unit 230c may be located to face each other. Alternatively, the second light source unit 230b and the third light source unit 230c may be located to face each other.

The second light source unit 230b and the third light source unit 230c may overlap in a first direction (X-axis direction). The first direction (X-axis direction) may be a direction perpendicular to the second direction (Y-axis direction). In addition, a third direction (Z-axis direction) may be a direction perpendicular to the first direction and the second direction.

In addition, the first light source unit 230a may be located in an area between the second light source unit 230b and the third light source unit 230c. In addition, directions of light emitted from the second light source unit 230b and the third light source unit 230c may opposite to each other.

Each light source unit may include substrates 231a, 231b, and 231c, the light sources 232a, 232b, and 232c, and optical elements 233a, 233b, and 233c.

Furthermore, the substrates 231a, 231b, and 231c, the light sources 232a, 232b, and 232c, and the optical elements 233a, 233b, and 233c may be sequentially located toward the interior. That is, the optical element may be located adjacent to the light guide LG relative to the substrate and the light source.

The substrates 231a, 231b, and 231c may be connected to the light sources 232a, 232b, and 232c, respectively, and may transmit electrical energy to enable the light sources 232a, 232b, and 232c to emit light.

The substrates 231a, 231b, and 231c may each be located on the outermost side of the housing 220.

In addition, the substrates 231a, 231b, and 231c may include a first substrate 231a, a second substrate 231b, and a third substrate 231c. The first substrate 231a may overlap the light guide LG in the second direction (Y-axis direction). The second substrate 231b and the third substrate 231c may overlap each other in the first direction (X-axis direction). In addition, the second substrate 231b and the third substrate 231c may be located to face each other in the housing 220. In addition, the first substrate 231a may be located in an area between the second substrate 231b and the third substrate 231c.

The light sources 232a, 232b, and 232c may each emit light. For example, light emitted from each of the light sources 232a, 232b, and 232c may be incident on the light guide LG in the housing 220. The light guide LG may be located in the housing 220.

In addition, the light sources 232a, 232b, and 232c may be provided as one or more light sources. The light sources 232a, 232b, and 232c may include a first light source 232a, a second light source 232b, and a third light source 232c. In addition, the light sources 232a, 232b, and 232c may be disposed on the respective substrates.

That is, the light sources 232a, 232b, and 232c in the light source unit 230 may be provided as a single light source or a plurality of light sources. For example, the light sources 232a, 232b, and 232c may include a plurality of light sources, including the first light source 232a, the second light source 232b, and the third light source 232c. The first to third light sources 232a to 232c may emit light in the same direction or in different directions. For example, the second light source 232b and the third light source 232c may be located to face each other. The second light source 232b and the third light source 232c may be located to overlap in the first direction (X-axis direction). In addition, the light guide LG may be located between the second light source 232b and the third light source 232c. Accordingly, the light guide LG may overlap the second light source 232b and the third light source 232c.

The first to third light sources 232a to 232c may emit light toward the light guide LG. In addition, the first light source 232a may overlap the light guide LG in the second direction. With this configuration, the projection device 200 may have the light source unit 230 in a compact form.

In addition, the first light source 232a, the second light source 232b, and the third light source 232c may each emit light with wavelengths or colors that are partially the same as or different from those of the others. For example, the first light source 232a, the second light source 232b, and the third light source 232c may each emit red, green, or blue light.

The optical elements 233a, 233b, and 233c may be provided as at least one or more optical elements. The optical elements 233a, 233b, and 233c may include a first optical element 233a, a second optical element 233b, and a third optical element 233c corresponding to the first light source 232a, the second light source 232b, and the third light source 232c, respectively. The first optical element 233a, the second optical element 233b, and the third optical element 233c may each include a filter. In addition, the first optical element 233a, the second optical element 233b, and the third optical element 233c may each include glass. The first optical element 233a, the second optical element 233b, and the third optical element 233c may each filter light. Alternatively, the first optical element 233a, the second optical element 233b, and the third optical element 233c may each block foreign substances entering the light source at an early stage. That is, the light sources can be protected.

The additional housing 240 may be disposed on the outer side of the barrel 210 and may surround the barrel 210. The barrel 210 is coupled to the housing 220 by various coupling methods, and the additional housing 240 may be coupled to the housing 220. The additional housing 240 may also be coupled to the barrel 210. Accordingly, the projection device 200 according to the embodiment can provide improved reliability.

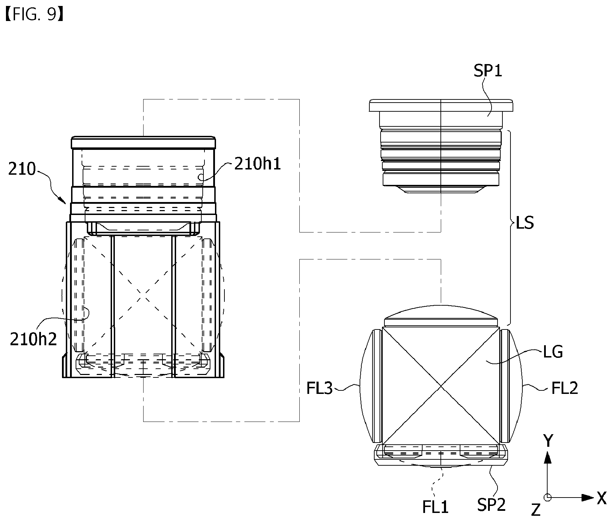

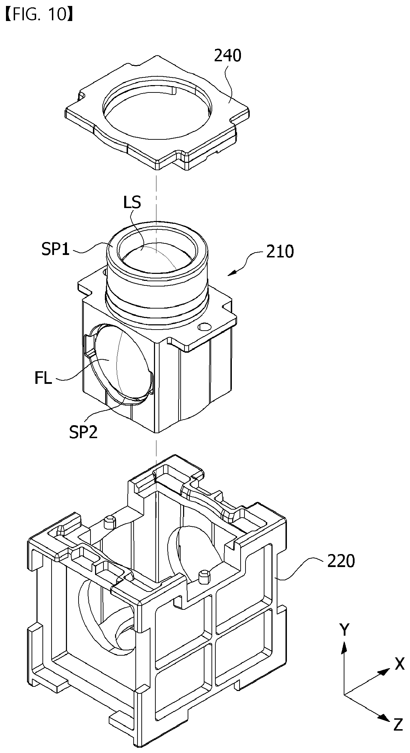

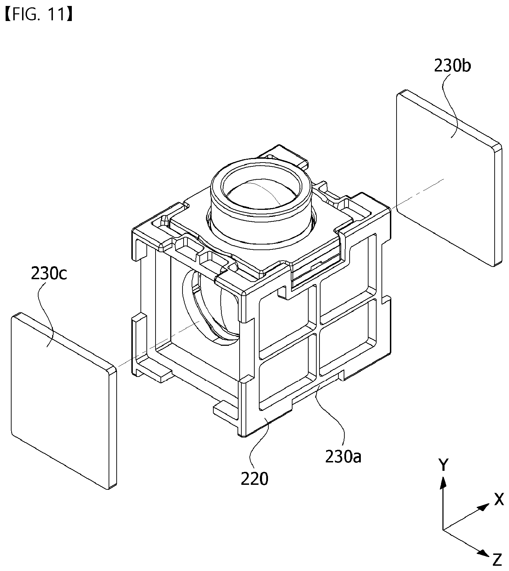

FIG. 9 is a view illustrating the coupling of the lens group, the first spacer, the light guide, the lenses, and the second spacer to the barrel in the projection device according to one embodiment. FIG. 10 is a view illustrating the coupling between the barrel, the housing, and the additional housing in the projection device according to one embodiment. FIG. 11 is a view illustrating the coupling between the housing and the light source units in the projection device according to one embodiment.

Referring to FIGS. 9 to 11, in the projection device according to the embodiment, the barrel 210 may include a first groove 210h1 and a second groove 210h2 as described above. The first groove 210h1 and the second groove 210h2 may overlap in the second direction (Y-axis direction). Furthermore, the second groove 210h2 and the first groove 210h1 may be disposed sequentially in the second direction (Y-axis direction).

The lens group may be disposed in the first groove 210h1. In addition, the light guide may be disposed in the second groove 210h2.

In addition, the first groove 210h1 and the second groove 210h2 may be disposed to be spaced apart from each other in the second direction (Y-axis direction). Further, the first groove 210h1 and the second groove 210h2 may be connected to each other through the through hole as described above. Thus, the light reflected by the light guide in the second groove 210h2 may be provided to the lens group in the first groove 210h1 and may ultimately be emitted to the display unit.

The lens group LS may be inserted into the first groove 210h1 of the barrel 210. In addition, in the barrel 210, the first spacer SP1 may be located on the outer side of the lens group LS in the first groove 210h1. The first spacer SP1 is in contact with the lens group LS, and may prevent the lens group LS from detaching, as described above.

In addition, the light guide LG and lenses FL1, FL2, and FL3 connected to the light guide LG may be inserted into the second groove 210h2. The light guide LG and the lenses FL1, FL2, and FL3 connected to the light guide LG may be located in the second groove 210h2. In addition, the second spacer SP2 may be located on an outer side of the light guide LG and the lenses FL1, FL2, and FL3 connected to the light guide LG. The second spacer SP2 may be in contact with the light guide LG or the lens (especially, a first guide lens FL1). Thus, the detachment of the light guide LG and the lenses FL1, FL2, and FL3 connected to the light guide LG may be suppressed. The lenses FL1, FL2, and FL3 may be referred to as guide lenses. For example, the lenses may include the first guide lens FL1, a second guide lens FL2, and a third guide lens FL3.

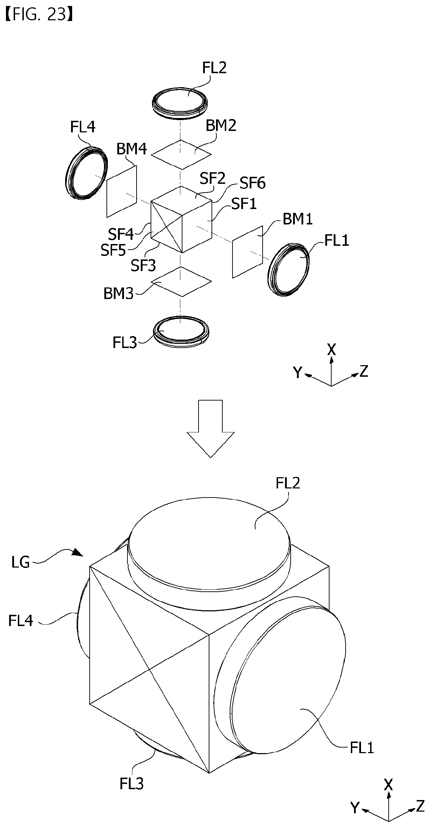

In the present embodiment, the light guide LG may be spaced apart from or in contact with the guide lenses FL1 to FL3 as described above. In this case, the guide lenses FL1 to LF3 are disposed on outer surfaces of the light guide LG and may each be smaller than the length or width of the respective outer surface. Furthermore, the guide lens may further include a fourth guide lens FL4 (see FIG. 23). Accordingly, the lenses FL1, FL2, FL3, and FL4 may include at least one guide lens. In addition, the lenses may be guide lenses. For example, the lenses may include the first guide lens FL1, the second guide lens FL2, the third guide lens FL3, and the fourth guide lens FL4. The lenses FL1, FL2, FL3, and FL4 may be disposed between the light source units and the light guide LG or between the lens group LS and the light guide LG. In addition, the lenses FL1, FL2, FL3, and FL4 may be coupled to the light guide LG. At least one lens may be disposed on at least one of first to fourth outer surfaces of the light guide LG.

In the present embodiment, the light guide LG may be spaced apart from or in contact with the guide lenses FL1 to FL4 as described above. In this case, the guide lenses FL1 to FL4 are disposed on the outer surfaces of the light guide LG and may each be smaller than the length or width of the respective outer surface.

The first spacer SP1 and the second spacer SP2 may be sequentially disposed in the second direction (Y-axis direction). The first spacer SP1 and the second spacer SP2 may overlap in the second direction (Y-axis direction). In addition, between the first spacer SP1 and the second spacer SP2, the lens group LS, the light guide LG, and the first guide lens FL1 may be located. Accordingly, the first spacer SP1 and the second spacer SP2 may overlap the lens group LS, the light guide LG, and the first guide lens FL1 in the second direction (Y-axis direction).

In addition, the barrel 210 may be inserted into the housing 220. That is, the barrel 210 may be located in an accommodation hole of the housing 220. Furthermore, the housing 220 and the barrel 210 may be coupled to each other using various coupling methods. For example, a protrusion of the housing 220 may be coupled to the coupling hole of the barrel 210. Furthermore, the housing 220 may be located below the barrel 210, and the additional housing 240 may be located above the barrel 210. Through the additional housing 240, the barrel 210 may maintain improved coupling strength with the housing 220.

In addition, after the barrel 210 is accommodated in the housing 220, the plurality of light sources may be inserted into side surfaces of the housing 220. For example, the first light source unit 230a, the second light source unit 230b, and the third light source unit 230c may be located on the side surfaces of the housing 220.

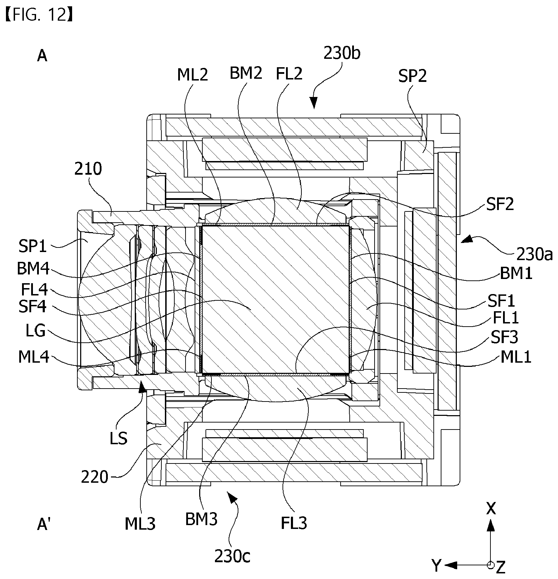

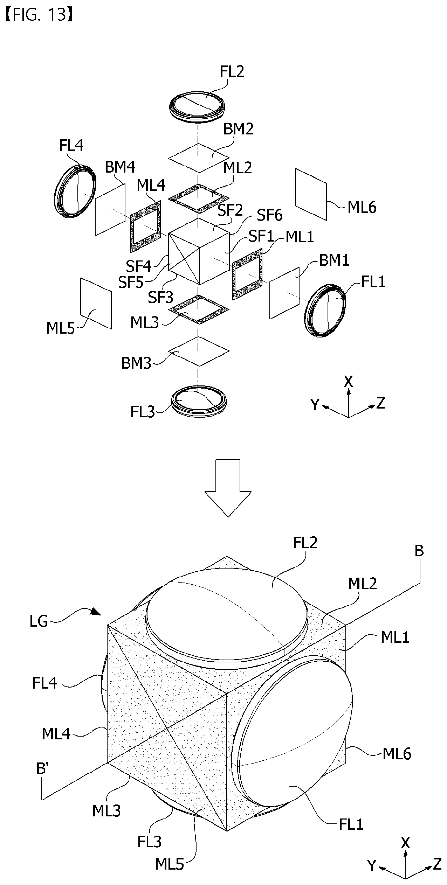

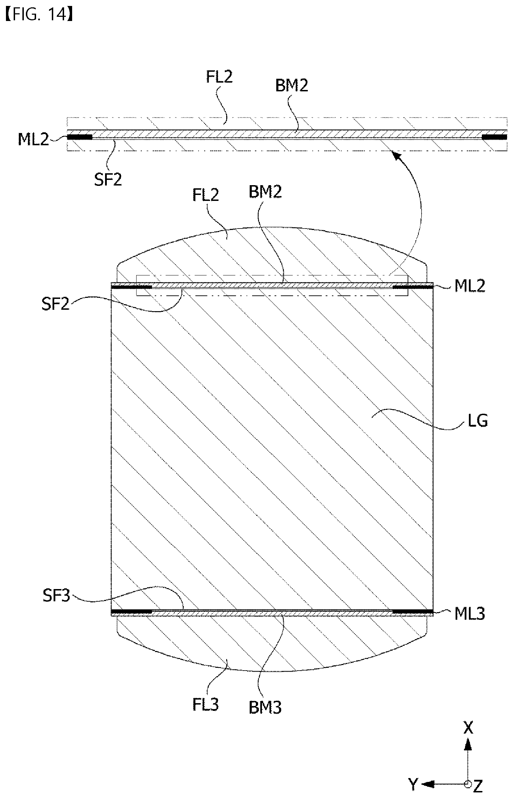

FIG. 12 is a cross-sectional view taken along line AA' of FIG. 7, FIG. 13 is a partial perspective view of a light guide, bonding members, a lens group, and lenses in a projection device according to a first embodiment., and FIG. 14 is a cross-sectional view taken along line BB' of FIG. 13.

Referring to FIGS. 12 to 14, as described above, the projection device according to the embodiment may include the above-described light source units 230a, 230b, and 230c (or the light sources) and light guide LG, and masking layers ML1, ML2, ML3, and ML4 disposed between a portion of the lens group LS or the lenses and the light guide LG. For example, masking layers ML1 to ML6 may be disposed between the light guide LG and the lens group LS or between the light guide LG and the lenses FL. In addition, the masking layers may be located on the outer surfaces of the light guide LG. Alternatively, the masking layers ML1, ML2, ML3, and ML4 may be disposed at edges of the outer surfaces facing the light source units 230a, 230b, and 230c (or the light sources). The masking layers ML1, ML2, ML3, and ML4 according to the embodiment may each have various shapes, such as a rectangular shape, a circular shape, or a shape having curved edges. In addition, the masking layer may have a thickness of 100 µm or less. In addition, the masking layer may be formed in various ways using opaque materials, such as printing with silk material, black coating (including black pigment), a sheet (e.g., a Soma sheet), or the like. In addition, the masking layer may also be made of a material with low transmittance. Thus, unintentional total reflection may be reduced or minimized. Further, flare and ghosting phenomena may be reduced or prevented. In addition, effects such as the reduction of optical aberrations may be provided.

In an embodiment, the masking layers may include first to sixth masking layers ML1 to ML6. The masking layer may be located on at least one of first to sixth outer surfaces SF1 to SF6. Preferably, the masking layer may be disposed on at least one of the first to fourth outer surfaces SF1 to SF4.

In an embodiment, the masking layer may include the first to fourth masking layers ML1 to ML4, which are disposed on the first to fourth outer surfaces SF1 to SF4, respectively. The first to fourth masking layers ML1 to ML4 may be in contact with the lenses FL or the outer surfaces (i.e., the first to fourth outer surfaces) of the light guide LG. The first to third masking layers ML1 to ML3 may be disposed between the light guide LG and the respective lenses FL. The fourth masking layer ML4 may be disposed between the light guide LG and the lens group LS. The fifth masking layer ML5 and the sixth masking layer ML6 may be located on the fifth and sixth outer surfaces of the light guide, respectively, which are outer surfaces other than the first to fourth outer surfaces.

The projection device may include the masking layers disposed at the edges of the outer surfaces of the light guide LG, the outer surfaces facing at least one light source unit, thereby reducing flare.

For example, the outer surfaces of the light guide LG may include the first to third outer surfaces SF1 to SF3 facing the light sources 232a, 232b, and 232c, respectively. The first outer surface SF1 may face the first light source 232a or the first light source unit 230a. The second outer surface SF2 may face the second light source 232b or the second light source unit 230b. The third outer surface SF3 may face the third light source 232c or the third light source unit 230c. Alternatively, the first light source 232a or the first light source unit may correspond to the first outer surface SF1. The second light source 232b, or the second light source unit may correspond to the second outer surface SF2. The third light source 232c, or the third light source unit may correspond to the third outer surface SF3.

In addition, the outer surfaces may include the fourth outer surface SF4. The fourth outer surface SF4 may be an outer surface of the light guide LG facing the lens group LS. In addition, the fourth outer surface SF4 may correspond to the lens group LS.

In addition, the outer surfaces may include the fifth outer surface SF5 and the sixth outer surface SF6. Among the outer surfaces of the light guide LG, the fifth outer surface SF5 and the sixth outer surface SF6 may be outer surfaces other than the first to fourth outer surfaces SF1 to SF4.

The masking layer, as described above, may be located at the edge of the outer surface of the light guide LG. Furthermore, the masking layer may be formed or located on the edge of each outer surface. In an embodiment, the above-described masking layers may include the first masking layer ML1, the second masking layer ML2, the third masking layer ML3, and the fourth masking layer ML4. Furthermore, the masking layers may include the fifth masking layer ML5 and the sixth masking layer ML6.

The first masking layer ML1 may be located or formed on the first outer surface SF1. The second masking layer ML2 may be located or formed on the second outer surface SF2. The third masking layer ML3 may be located or formed on the third outer surface SF3. The fourth masking layer ML4 may be located or formed on the fourth outer surface SF4. The fifth masking layer ML5 may be located or formed on the fifth outer surface SF5. The sixth masking layer ML6 may be located or formed on the sixth outer surface SF6.

In an embodiment, the first to fourth masking layers ML1 to ML4 may be disposed along the edges of the respective outer surfaces. For example, the first to fourth masking layers ML1 to ML4 may each include an opening area. The opening area may be located on a central portion of each of the first to fourth masking layers ML1 to ML4. The fifth masking layer ML5 and the sixth masking layer ML6 may be disposed over the entire fifth outer surface SF5 and the entire sixth outer surface SF6, respectively. As a modified example, the fifth masking layer ML5 and the sixth masking layer ML6 may be partially disposed on the fifth outer surface SF5 and the sixth outer surface SF6, respectively.

Furthermore, the projection device may include bonding members BM1 to BM4 located between the light guide LG and the lenses or the lens group. That is, the bonding members BM1 to BM4 may be disposed between the light guide LG and the lenses FL or the light guide LG and the lens group LS. Thus, the bonding members BM1 to BM4 may bond the light guide LG, the masking layers, and the lens group (or the lenses) to each other. The bonding members may include a first bonding member BM1, a second bonding member BM2, a third bonding member BM3, and a fourth bonding member BM4. The masking layer and the bonding member may each have an outer surface corresponding to the dispersion or roughness of each outer surface. For example, the masking layer may be formed depending on the dispersion or roughness of each outer surface.

The first bonding member BM1 may be located between the first outer surface SF1 and the first guide lens FL1. The second bonding member BM2 may be located between the second outer surface SF2 and the second guide lens FL2. The third bonding member BM3 may be located between the third outer surface SF3 and the third guide lens FL3. The fourth bonding member BM4 may be located between the fourth outer surface SF4 and the fourth guide lens FL4.

For example, the light guide LG may include the first bonding member BM1 having a protruding structure toward the first light source unit (or the first light source) on an inner side of the first masking layer ML1, the first masking layer ML1 being disposed on the first outer surface SF1 of the light guide LG. That is, the projection device according to the embodiment may include a protrusion, which is located on an inner side of the masking layer, on the outer surface.

Similarly, the second masking layer ML2 may be located on the second outer surface SF2 and may have a protruding structure extending toward the second light source unit (or the second light source). the third masking layer ML3 may be located on the third outer surface SF3 and may have a protruding structure extending toward the third light source unit (or the third light source). The fourth masking layer ML4 may be located on the fourth outer surface SF4 and may have a protruding structure extending toward the lens group.

Furthermore, the above-described first guide lens FL1 may be located between the first outer surface SF1 and the first light source unit 230a. The second guide lens FL2 may be located between the second outer surface SF2 and the second light source unit 230b. The third guide lens FL3 may be located between the third outer surface SF3 and the third light source unit 230c.

Alternatively, the first guide lens FL1 may be located adjacent to the first outer surface SF1. The second guide lens FL2 may be located adjacent to the second outer surface SF2. The third guide lens FL3 may be located adjacent to the third outer surface SF3.

In an embodiment, each lens or the guide lens may be disposed in contact with or spaced apart from each outer surface. For example, the first guide lens FL1 may be in contact with or spaced apart from the first outer surface SF1. The second guide lens FL2 may be in contact with or spaced apart from the second outer surface SF2. The third guide lens FL3 may be in contact with or spaced apart from the third outer surface SF3.

For example, each of the masking layers ML1 to ML4 may have a convex structure protruding toward an inner side of the light guide LG or toward the adjacent light source.

In addition, in the projection device, total reflection caused by light emitted toward the edge of each outer surface may be suppressed by the masking layer. Accordingly, the projection device in which a flare phenomenon is prevented or reduced may be provided.

The masking layer may include, for example, a black coating, a member for etching treatment, and the like. Accordingly, a total reflection phenomenon that causes the above-described flare phenomenon can be more effectively suppressed.

In addition, the lens or guide lens may be disposed on the masking layer such that the masking layer overlaps each lens. For example, the first guide lens FL1 may be disposed on the first masking layer ML1. The first guide lens FL1 may overlap the first masking layer ML1 in the second direction (Y-axis direction). With this configuration, the path of total reflection on each outer surface or the like can be reduced, while maximizing an effective light area.

Similarly, the second guide lens FL2 may be disposed on the second masking layer ML2. The second guide lens FL2 may overlap the second masking layer ML2 in the first direction (X-axis direction).

In addition, the third guide lens FL3 may be disposed on the third masking layer ML3. The third guide lens FL3 may overlap the third masking layer ML3 in the first direction (X-axis direction).

The fourth guide lens FL4 may correspond to the lens (see Ln in FIG. 8), which is closest to the light source or the light guide LG in the lens group LS. The following description will be provided based on this. The fourth guide lens FL4 may be disposed on the fourth masking layer ML4. The fourth guide lens FL4 may overlap the fourth masking layer ML4 in the second direction (Y-axis direction). In addition, the fourth guide lens FL4 may be larger in size than each of the first to third guide lenses.

In addition, the first masking layer ML1 may be located opposite to the fourth masking layer ML4. The first masking layer ML1 and the fourth masking layer ML4 may at least partially overlap in the second direction (Y-axis direction).

In addition, the second masking layer ML2 may be located opposite to the third masking layer ML3. The second masking layer ML2 and the fourth masking layer ML4 may at least partially overlap in the second direction (Y-axis direction).

In an embodiment, each lens or guide lens may have positive or negative refractive power. For example, each of the first to third guide lenses FL1 to FL3 may have positive or negative refractive power.

Further, in the projection device according to the embodiment, each masking layer may have an open-loop or closed-loop structure on the outer surface. As illustrated in the drawing, the masking layer may have an open-loop structure on the outer surface.

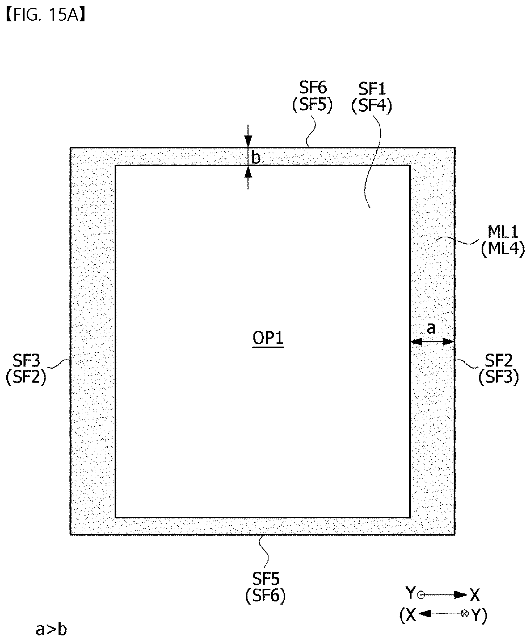

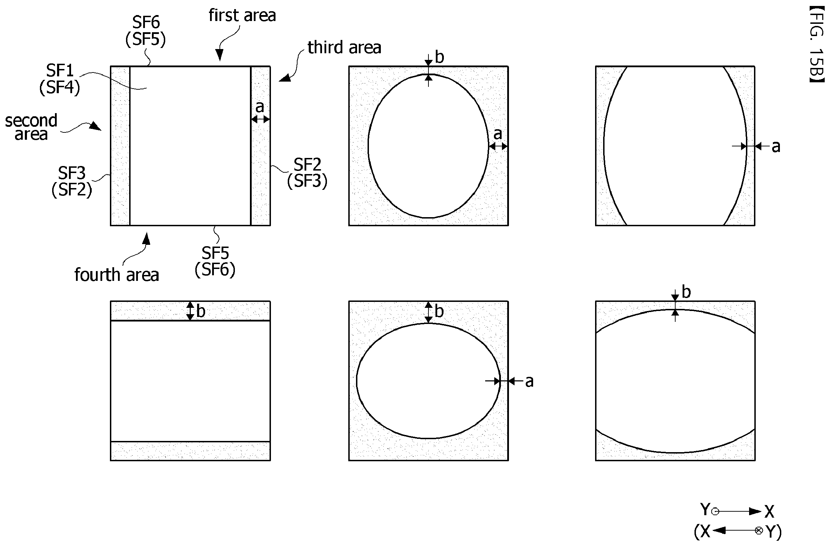

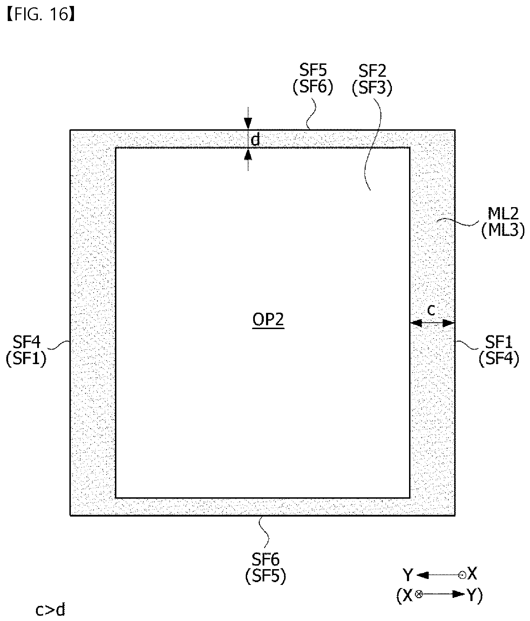

FIG. 15A is a view from the first outer surface or the fourth outer surface of FIG. 13, FIG. 15B is a view illustrating various usage examples, and FIG. 16 is a view from the second outer surface or the third outer surface of FIG. 13.

Referring to FIGS. 15 and 16, in the projection device according to the embodiment, the masking layer may have a long side and a short side with different lengths. For example, the first to fourth masking layers ML1 to ML4 may each have a long side and a short side with different lengths. In addition, opposing long sides may have the same thickness. In addition, opposing short sides may have the same thickness.

In an embodiment, any one of the first to fourth masking layers ML1 to ML4 may have a thickness a in an area in contact with the adjacent masking layer (one of the first to fourth masking layers), which is greater than a thickness b in an area in contact with the other masking layers (one of the fifth and sixth masking layers). With this configuration, a plurality of masking layers may be disposed corresponding to areas adjacent to the path of light movement, which may further enhance the effect of reducing or preventing flare.

In addition, the first to fourth masking layers ML1 to ML4 may each have a relatively greater thickness along the edges in contact with the first to fourth outer surfaces SF1 to SF4, compared to other areas. For example, the first to fourth masking layers ML1 to ML4 may each have a greater thickness along the first to fourth outer surfaces SF1 to SF4, compared to the fifth and sixth outer surfaces SF5 and SF6.

In an embodiment, each of the first to fourth masking layers ML1 to ML4 may have an opening area OP1 or OP2. In addition, the opening area OP1 or OP2 may correspond to the size of the facing or corresponding light source. In an embodiment, the opening areas OP1 and OP2 may each correspond to an effective diameter of the masking layer. A ratio of a long side to a short side of each of the opening areas OP1 and OP2 in the masking layers may be the same as or similar to a ratio of a long side to a short side of the light source. Here, the term "similar" refers to a range within 20%]

In addition, each of the opening areas OP1 and OP2 may be larger in size than an emission surface of the corresponding light source. With this configuration, light loss can be reduced. In addition, the shapes of the opening areas on the first to third outer surfaces SF1 to SF3 may be identical to each other. In addition, the sizes of the opening areas on the first to third outer surfaces SF1 to SF3 may be identical to each other. With this configuration, control of optical performance and the like may be easily performed.

Furthermore, in the projection device according to the embodiment, the masking layer may have an open-loop structure on the outer surface. On the first outer surface SF1, the first masking layer ML1 may have an open-loop structure in an XZ plane. In addition, on the second outer surface SF2, the second masking layer ML2 may have an open-loop structure in a YZ plane. In addition, on the third outer surface SF3, the third masking layer ML3 may have an open-loop structure in the YZ plane. In addition, on the fourth outer surface SF4, the fourth masking layer ML4 may have an open-loop structure in the XZ plane.

Referring further to FIG. 15B, each of the first to fourth masking layers ML1 to ML4 may include a first area, a third area located to face the first area, a second area located between the first area and the third area, and a fourth area located between the first area and the third area and disposed to face the second area.

In each of the first to fourth masking layers ML1 to ML4, the thickness a or b of the first to fourth areas may be different from each other.

For example, the thickness of the first to fourth areas may vary depending on the shape of the opening area in each of the first to fourth masking layers ML1 to ML4.

In addition, in each masking layer, only the third and fourth areas may be present without the first and second areas. Conversely, in each masking layer, only the first area and the second area may be present without the third and fourth areas.

Furthermore, when the opening area is circular, the thickness of each of the first to fourth areas may increase toward the edge at the corner.

In addition, even when there is no facing area, the thickness of each of the first to fourth areas may have curvature and may increase toward the edge at the corner.

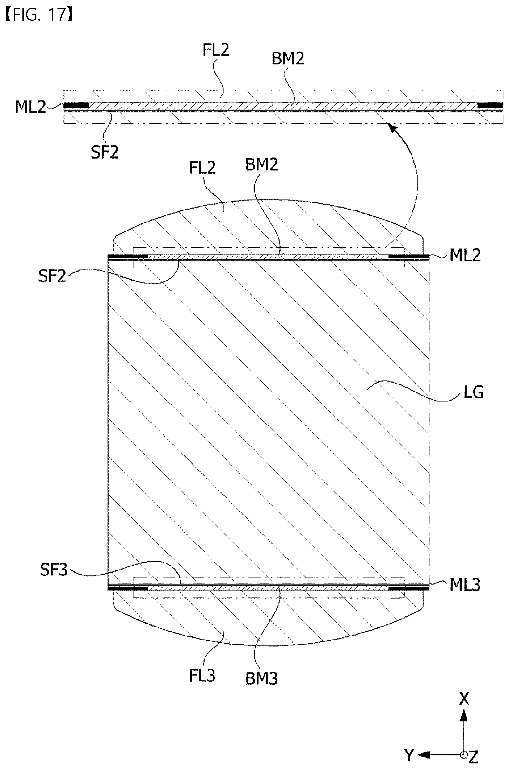

FIG. 17 is a cross-sectional view of a light guide, bonding members, and a lens group in a projection device according to a second embodiment.

Referring to FIG. 17, in the projection device according to the second embodiment, the descriptions of each component provided above may apply in the same manner, except for the details described below.

In the embodiment, at least one of the masking layers ML1 to ML4 may be convex toward the respective adjacent one of the lenses FL1, FL2, FL3, and FL4. For example, the bonding member may be partially located in the opening area of the masking layer.

For example, the second masking layer ML2 may be located on the second bonding member BM2. Thus, the light guide LG, the second bonding member BM2, the second masking layer ML2, and the second guide lens FL2 may be sequentially located.

In addition, the third masking layer ML3 may be located on the third bonding member BM3. Thus, the light guide LG, the third bonding member BM3, the third masking layer ML3, and the third guide lens FL3 may be sequentially located.

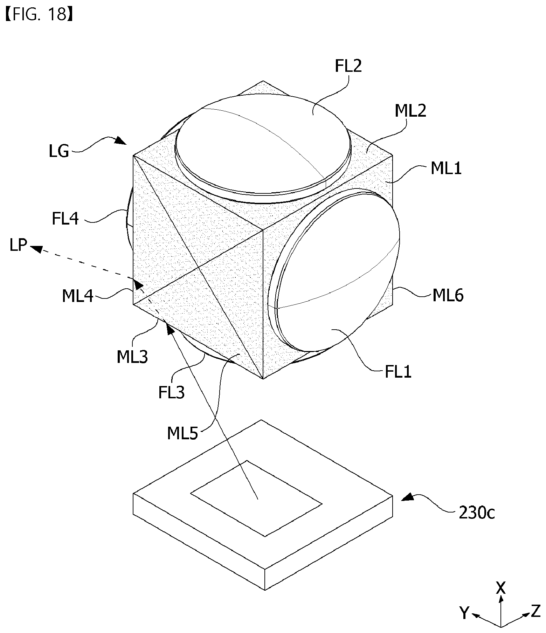

FIG. 18 is a view illustrating effects of the projection device according to the embodiment.

Referring to FIG. 18, in the projection device of various embodiments according to the present invention, light emitted from the light sources may be incident on the first to third outer surfaces SF1 to SF3. In addition, the light incident through the first to third outer surfaces SF1 to SF3 may be emitted from the fourth outer surface SF4 and provided toward the lens group (or the fourth guide lens).

Furthermore, an effective diameter (opening area) on the fourth outer surface SF4 may be larger in size than an effective diameter (opening area) on each of the first to third outer surfaces SF1 to SF3.

Furthermore, the light may be blocked by the fifth masking layer ML5 disposed on the fifth outer surface SF5 and the sixth masking layer ML6 disposed on the sixth outer surface SF6. Accordingly, the flare and ghosting phenomena may be prevented or reduced.

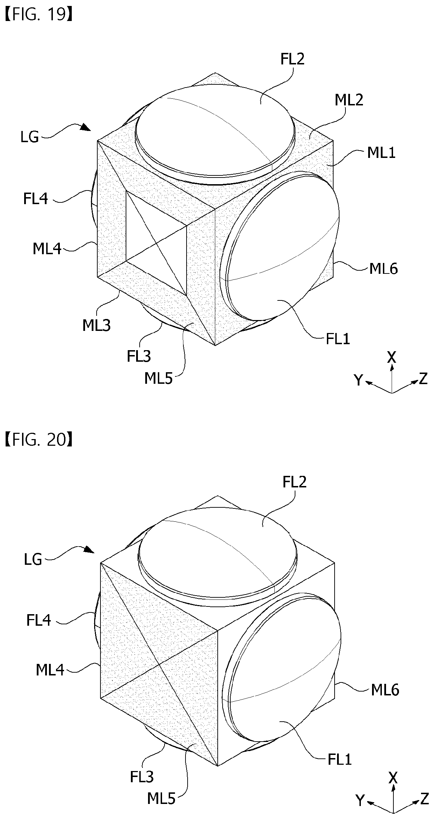

FIG. 19 is a partial perspective view of a light guide, bonding members, a lens group, and lenses in a projection device according to a third embodiment.

In the projection device according to the embodiment, the descriptions of each component provided above may apply in the same manner, except for the details described below.

Referring to FIG. 19, the fifth masking layer ML5 and the sixth masking layer ML6 may be located on the fifth outer surface SF5 and the sixth masking layer ML6, respectively.

The light guide LG may have the opening area in the masking layers not only on the outer surfaces facing the lens and the lens group but also on the other outer surfaces. For example, at least one of the fifth masking layer ML5 and the sixth masking layer ML6 may have the opening area. With this configuration, optical performance may be further improved. For example, optical performance, such as flare reduction, may be improved.

FIG. 20 is a partial perspective view of a light guide, bonding members, a lens group, and lenses in a projection device according to a fourth embodiment.

In the projection device according to the embodiment, the descriptions of each component provided above may apply in the same manner, except for the details described below.

Referring to FIG. 20, the masking layer may be located on at least one of the outer surfaces of the light guide LG according to the present embodiment. For example, some of the first to fourth masking layers ML1 to ML4 may be located on the outer surfaces of the light guide LG.

For example, the first masking layer ML1 may not be located on the first outer surface SF1. The second masking layer ML2 may not be located on the second outer surface SF2. The third masking layer ML3 may not be located on the third outer surface SF3. The fourth masking layer ML4 may be located on the fourth outer surface SF4.

Accordingly, by disposing the fourth masking layer ML4 on the emission surface (corresponding to the fourth outer surface), from which light incident through the first to third outer surfaces of the light guide LG is emitted, the flare or ghosting phenomenon can be effectively reduced.

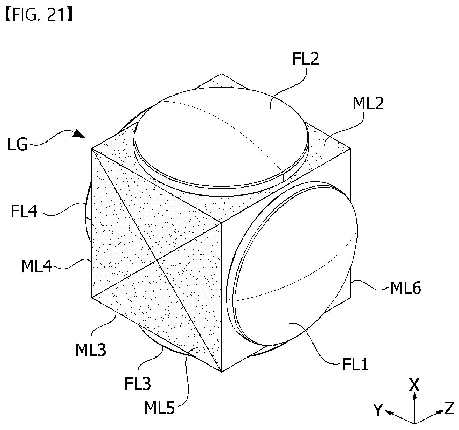

FIG. 21 is a partial perspective view of a light guide, bonding members, a lens group, and lenses in a projection device according to a fifth embodiment.

In the projection device according to the embodiment, the descriptions of each component provided above may apply in the same manner, except for the details described below.

The masking layer may be located on at least one of the outer surfaces of the light guide LG according to the present embodiment. For example, some of the first to fourth masking layers ML1 to ML4 may be located on the outer surfaces of the light guide LG.

For example, at least one of the first to third masking layers ML1 to ML3 may be located on at least one of the first to third outer surfaces SF1 to SF3.

The first masking layer ML1 may not be located on the first outer surface SF1. The second masking layer ML2 may be located on the second outer surface SF2. The third masking layer ML3 may be located on the third outer surface SF3. The fourth masking layer ML4 may be located on the fourth outer surface SF4. With this configuration, optical performance, such as flare reduction, may be improved.

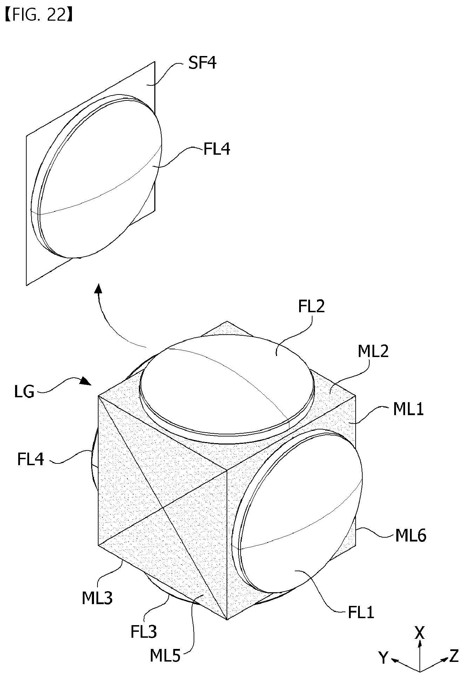

FIG. 22 is a partial perspective view of a light guide, bonding members, a lens group, and lenses in a projection device according to a sixth embodiment.

In the projection device according to the embodiment, the descriptions of each component provided above may apply in the same manner, except for the details described below.

The masking layer may be located on at least one of the outer surfaces of the light guide LG according to the present embodiment. For example, some of the first to fourth masking layers ML1 to ML4 may be located on the outer surfaces of the light guide LG.

For example, at least one of the first to third masking layers ML1 to ML3 may be located on at least one of the first to third outer surfaces SF1 to SF3.

The first masking layer ML1 may be located on the first outer surface SF1. The second masking layer ML2 may be located on the second outer surface SF2. The third masking layer ML3 may be located on the third outer surface SF3. The fourth masking layer ML4 may not be located on the fourth outer surface SF4.

With this configuration, optical performance, such as flare reduction, may be improved.

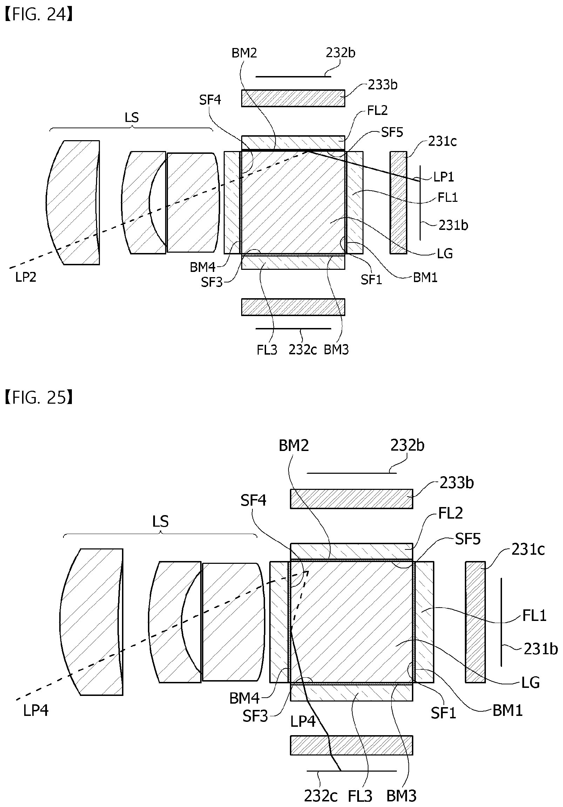

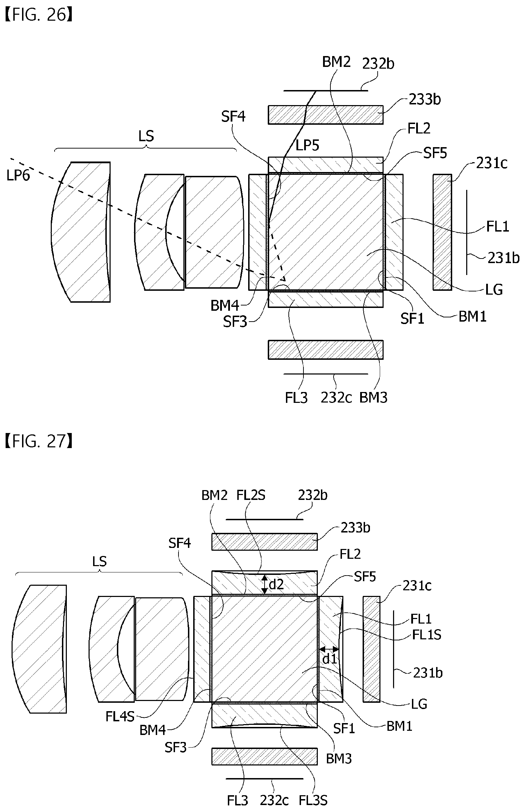

FIG. 23 is a partial perspective view of a light guide, bonding members, a lens group, and lenses in a projection device according to a seventh embodiment. FIGS. 24 to 26 are views illustrating effects of the projection device according to the seventh embodiment. FIG. 27 is a cross-sectional view of the lens group, the light guide, the lenses, the light source, and the optical elements in the projection device according to the seventh embodiment.

Referring to FIGS. 12 and 23, as described above, the projection device according to the embodiment may include the light source units 230a, 230b, and 230c (or light sources), the light guide LG, the lenses FL disposed between the lens group LS and the light guide LG or between the light source units and the light guide LG, and the bonding members BM1 to BM4 disposed between the light guide LG and the lenses or the lens group, which are described above.

In the embodiment, the projection device may suppress total reflection and provide flare reduction by including the lens or the guide lens coupled to the outer surface of the light guide LG facing at least one of the light source units.

Furthermore, in the embodiment, the lenses FL1 to FL4 may be made of the same material as the light guide LG. In addition, the lenses FL1 to FL4 may each be made of a material having a refractive index ratio with that of the light guide LG, which will be described below. For example, the lenses FL1 to FL4 may each include a portion of the material of the light guide LG.

A ratio of a refractive index of each of the lenses FL1 to FL4 to a refractive index of the light guide LG may be in the range of 1:0.9 to 1:1.1. More preferably, the ratio of the refractive index of each of the lenses FL1 to FL4 to the refractive index of the light guide LG may be in the range of 1:0.98 to 1:1.02. With this configuration, total reflection of light at the outer surface of the light guide LG adjacent to the lens may be suppressed, and the degree of refraction may also be reduced. That is, unnecessary light from the light source may undergo total reflection at each outer surface of the light guide LG through which the light passes, and may not be projected or emitted (exit) through the lens group LS to the waveguide.

For example, in the light guide LG, each of the first to fourth outer surfaces SF1 to SF4 may be a surface on a path through which light passes. Accordingly, in order to block total reflection, when light is blocked through a mechanical structure or surface treatment, there is an issue in which light for actual projection or emission is also blocked.

In the projection device according to the embodiment, by disposing the lenses or the guide lenses FL1 to FL4 on the first to fourth outer surfaces SF1 to SF4 of the light guide LG, total reflection at the first to fourth outer surfaces SF1 to SF4 can be prevented. In other words, when total reflection occurs at the first to fourth outer surfaces SF1 to SF4, the light reflected inside the light guide LG may be emitted as unnecessary light or into the waveguide or the like. In the embodiment, total reflection may occur at one side surface of each of the guide lenses FL1 to FL4 (the surface in contact with air or the exterior) rather than at the first to fourth outer surfaces SF1 to SF4, due to the lenses or the guide lenses FL1 to FL4. Accordingly, at least a portion of the totally reflected light may not be incident into the light guide LG. As a result, the emission of flare or unnecessary light caused by total reflection can be suppressed.

For example, the outer surfaces of the light guide LG may include the first to third outer surfaces SF1 to SF3 facing the light sources 232a, 232b, and 232c, respectively. The first outer surface SF1 may face the first light source 232a or the first light source unit 230a. The second outer surface SF2 may face the second light source 232b or the second light source unit 230b. The third outer surface SF3 may face the third light source 232c or the third light source unit 230c. Alternatively, the first light source 232a or the first light source unit may correspond to the first outer surface SF1. The second light source 232b or the second light source unit may correspond to the second outer surface SF2. The third light source 232c or the third light source unit may correspond to the third outer surface SF3.

In addition, the outer surfaces may include the fourth outer surface SF4. The fourth outer surface SF4 may be the outer surface of the light guide LG facing the lens group LS. In addition, the fourth outer surface SF4 may correspond to the lens group LS.

The first outer surface SF1 and the fourth outer surface SF4 may be opposing surfaces. For example, the first outer surface SF1 and the fourth outer surface SF4 of the light guide LG may be located to correspond to each other. The first outer surface SF1 and the fourth outer surface SF4 of the light guide LG may overlap in the second direction (Y-axis direction). In the light guide LG, the first outer surface SF1 and the fourth outer surface SF4 may be facing surfaces.

The second outer surface SF2 and the third outer surface SF3 may be opposing surfaces. For example, the second outer surface SF2 and the third outer surface SF3 of the light guide LG may be located to correspond to each other. The second outer surface SF2 and the third outer surface SF3 of the light guide LG may overlap in the first direction (X-axis direction). In the light guide LG, the second outer surface SF2 and the third outer surface SF3 may be facing surfaces.

In addition, the outer surfaces may include the fifth outer surface SF5 and the sixth outer surface SF6. Among the outer surfaces of the light guide LG, the fifth outer surface SF5 and the sixth outer surface SF6 may be outer surfaces other than the first to fourth outer surfaces SF1 to SF4.

Furthermore, the projection device may include the bonding members BM1 to BM4 disposed between the light guide LG and the lenses FL1 to FL4. Accordingly, the bonding members BM1 to BM4 may be in contact with the light guide LG and the lenses FL1 to FL4.

The bonding members may include the first bonding member BM1, the second bonding member BM2, the third bonding member BM3, and the fourth bonding member BM4. The bonding member may have an outer surface corresponding to the dispersion or roughness of each outer surface.

The first bonding member BM1 may be located between the first outer surface SF1 and the first guide lens FL1. The second bonding member BM2 may be located between the second outer surface SF2 and the second guide lens FL2. The third bonding member BM3 may be located between the third outer surface SF3 and the third guide lens FL3. The fourth bonding member BM4 may be located between the fourth outer surface SF4 and the fourth guide lens FL4.

Furthermore, the first guide lens FL1 may be located between the first outer surface SF1 and the first light source unit 230a. The first guide lens FL1 may be coupled to the first outer surface SF1. The second guide lens FL2 may be located between the second outer surface SF2 and the second light source unit 230b. The second guide lens FL2 may be coupled to the second outer surface SF2. The third guide lens FL3 may be located between the third outer surface SF3 and the third light source unit 230c. The third guide lens FL3 may be coupled to the third outer surface SF3. The fourth guide lens FL4 may be located between the fourth outer surface SF4 and the lens group LS. The fourth guide lens FL4 may be coupled to the fourth outer surface SF4.

Alternatively, the first guide lens FL1 may be located adjacent to the first outer surface SF1. The second guide lens FL2 may be located adjacent to the second outer surface SF2. The third guide lens FL3 may be located adjacent to the third outer surface SF3. The fourth guide lens FL4 may be located adjacent to the fourth outer surface SF4.

In an embodiment, each lens or guide lens may be coupled to each outer surface through the bonding member. In addition, in the projection device, total reflection caused by light emitted toward the edge of each outer surface may be suppressed by the guide lens. Accordingly, the projection device in which a flare phenomenon is prevented or reduced may be provided.

Specifically, in the embodiment, a ratio of a refractive index of each of the bonding members BM1 to BM4 to the refractive index of the light guide LG or lens may be in the range of 1:0.9 to 1:1.1. More preferably, the ratio of the refractive index of each of the bonding members BM1 to BM4 to the refractive index of the light guide LG or lens may be in the range of 1:0.98 to 1:1.02. With this configuration, total reflection of light may be suppressed, and the degree of refraction may be reduced at the bonding member and a side surface of the light guide LG or the lens adjacent to the bonding member. That is, unnecessary light from the light source may undergo total reflection at each outer surface of the light guide LG through which the light passes, and may not be projected or emitted (exit) through the lens group LS to the waveguide.

In the projection device according to the embodiment, by disposing the lenses or the guide bonding members BM1 to BM4 on the first to fourth outer surfaces SF1 to SF4 of the light guide LG, total reflection at the first to fourth outer surfaces SF1 to SF4 can be prevented. In other words, when total reflection occurs at the first to fourth outer surfaces SF1 to SF4, the light reflected inside the light guide LG may be emitted as unnecessary light or into the waveguide or the like. In the embodiment, total reflection may occur at one side surface of each of the guide lenses FL1 to FL4 (the surface in contact with air or the exterior) after passing through the guide bonding members BM1 to BM4 rather than at the first to fourth outer surfaces SF1 to SF4, due to the bonding members BM1 to BM4. Accordingly, at least a portion of the totally reflected light may not be incident into the light guide LG. As a result, the emission of flare or unnecessary light caused by total reflection can be suppressed.

In an embodiment, the material of the bonding members BM1 to BM4 may be the same as the material of the lenses FL1 to FL4 or the light guide LG. In addition, the material of the bonding members BM1 to BM4 may be made of a material that satisfies the above-described refractive index ratio.

Referring to FIG. 24, the projection device according to the embodiment may suppress the emission of flare or unnecessary light caused by total reflection.

For example, as illustrated in the drawing, light emitted from the first light source 232a may be incident (LP1) on the light guide LG through the first optical element 233a and the first outer surface SF1, and may be incident on the second outer surface SF2. At this time, the second outer surface SF2 may be coupled to the second bonding member BM2 and the second guide lens FL2, thereby suppressing total reflection at the second outer surface SF2. For example, when the second guide lens FL2 is not disposed on the second outer surface SF2, light totally reflected at the second outer surface SF2 may be emitted (LP2) to the waveguide or the like through the fourth outer surface SF4, the fourth guide lens FL4, and the lens group LS. That is, unnecessary light caused by total reflection due to flare may be emitted to the waveguide, thereby degrading the optical performance of the projection device. In the projection device according to the embodiment, "LP2" caused by total reflection may be eliminated, thereby providing improved optical performance.

Referring to FIG. 25, light emitted from the third light source 232c may be incident (LP3) on the light guide LG through the third optical element 233c and the third outer surface SF3, and may be incident on the fourth outer surface SF4. At this time, the fourth outer surface SF4 may be coupled to the fourth bonding member BM4 and the fourth guide lens FL4, thereby suppressing total reflection at the fourth outer surface SF4. For example, when the fourth guide lens FL4 is not disposed on the fourth outer surface SF4, light totally reflected at the fourth outer surface SF4 may be reflected again at a coated surface (or reflective sheet) of the light guide LG and then be emitted (LP4) to the waveguide or the like through the fourth outer surface SF4, the fourth guide lens FL4, and the lens group LS. That is, unnecessary light caused by total reflection due to flare may be emitted to the waveguide, thereby degrading the optical performance of the projection device. In the projection device according to the embodiment, "LP4" caused by total reflection may be eliminated, thereby providing improved optical performance.

Referring to FIG. 26, light emitted from the second light source 232b may be incident (LP5) on the light guide LG through the second optical element 233b and the second outer surface SF2, and may be incident on the fourth outer surface SF4. At this time, the fourth outer surface SF4 may be coupled to the fourth bonding member BM4 and the fourth guide lens FL4, thereby suppressing total reflection at the fourth outer surface SF4. For example, when the fourth guide lens FL4 is not disposed on the fourth outer surface SF4, light totally reflected at the fourth outer surface SF4 may be reflected again at the coated surface (or reflective sheet) of the light guide LG and then be emitted (LP6) to the waveguide or the like through the fourth outer surface SF4, the fourth guide lens FL4, and the lens group LS. That is, unnecessary light caused by total reflection due to flare may be emitted to the waveguide, thereby degrading the optical performance of the projection device. In the projection device according to the embodiment, "LP6" caused by total reflection may be eliminated, thereby providing improved optical performance.

In addition, the lenses or guide lenses may be disposed on the respective outer surfaces SF1 to SF4 of the light guide LG such that each outer surface overlaps the respective lens. For example, the first guide lens FL1 may overlap the first light source and the first outer surface SF1 in the second direction (Y-axis direction). In addition, the fourth guide lens FL4 may overlap the fourth outer surface SF4 in the second direction (Y-axis direction). The second guide lens FL2 may overlap the second light source and the second outer surface SF2 in the first direction (X-axis direction). The third guide lens FL3 may overlap the third light source and the third outer surface SF3 in the first direction (X-axis direction). With this configuration, total reflection occurring at each outer surface of the light guide LG may be reduced.

In addition, the fourth guide lens FL4 may have the same or a different size or thickness (length in a direction toward the adjacent outer surface of the light guide) compared to the first to third guide lenses FL1 to FL3. In an embodiment, each lens or guide lens may have positive or negative refractive power. For example, each of the first to fourth guide lenses FL1 to FL4 may have positive or negative refractive power. In addition, surfaces FL1s to FL3s of the first to third guide lenses FL1 to FL3, each facing the adjacent light source or the light source emitting light to be transmitted, may each be convex or concave toward the light guide LG.

Referring to FIG. 27, in the projection device according to the embodiment, the surfaces FL1s to FL3s of the first to third guide lenses FL1 to FL3, each facing the adjacent light source or the light source emitting light to be transmitted, may each be convex toward the light guide LG. Alternatively, the surfaces FL1s to FL3s of the first to third guide lenses FL1 to FL3, each facing the adjacent light source or the light source emitting light to be transmitted, may each be concave toward the adjacent light source.

In addition, the surface FL4s of the fourth guide lens FL4, which faces the lens group LS, may be concave or convex toward the lens group LS. In addition, the fourth guide lens FL4 may have a surface facing the lens group LS and having a positive or negative radius of curvature. The radius of curvature may be determined based on light directed from the light source toward the waveguide.

In addition, the surface FL4s of the fourth guide lens FL4, which faces or is directed toward the lens group LS, may be flat. For example, the radius of curvature of the surface FL4s of the fourth guide lens FL4, which faces or is directed toward the lens group LS, may be 50 or more. In addition, the surfaces FL1s to FL3s of the first to third guide lenses FL1 to FL3, which face the adjacent light source, may each be concave toward the adjacent light source.

In addition, each of the first to third guide lenses FL1 to FL3 may have the same radius of curvature on both the surface facing the light source and the surface facing the light guide LG. For example, the surfaces FL1s, FL2s, and FL3s of the first to third guide lenses FL1 to FL3, which face the light sources, may have the same curvature. In addition, the surfaces of the first to third guide lenses FL1 to FL3 facing the light guide LG may have the same curvature.

In addition, the first to third guide lenses FL1 to FL3 may have the same thickness as, or a different thickness from, the fourth guide lens FL4.

In an embodiment, thicknesses d1, d2, and d3 of the first to third guide lenses FL1 to FL3 may each be different from a thickness d4 of the fourth guide lens FL4. The thicknesses d1, d2, and d3 of the first to third guide lenses FL1 to FL3 may each be greater than the thickness d4 of the fourth guide lens FL4. Thus, spaces for the arrangement and the like of the lenses in the lens group LS may be easily secured. Furthermore, by increasing the thicknesses d1, d2, and d3 of the first to third guide lenses FL1 to FL3, total reflection of light may occur on surfaces (e.g., outer surfaces facing the light sources) of the first to third guide lenses FL1 to FL3, which are more spaced apart from the outer surfaces of the light guide (e.g., SF1 to SF4), rather than occurring at the outer surfaces of the light guide. Accordingly, even when light reflection occurs on the surfaces (e.g., the outer surfaces facing the light source) of the first to third guide lenses FL1 to FL3, the probability of the light being projected through the fourth outer surface SF4 to the lens group LS may be further reduced. Accordingly, the projection device may provide improved optical performance.

As a modified example, when the first to third guide lenses FL1 to FL3 have the same thickness as the fourth guide lens FL4, manufacturing efficiency may be improved.

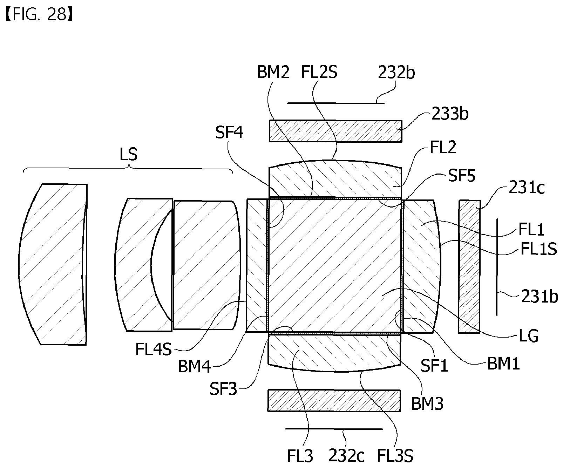

FIG. 28 is a cross-sectional view of a lens group, a light guide, lenses, light sources, and optical elements in a projection device according to an eighth embodiment.

Referring to FIG. 28, in the projection device according to the eighth embodiment, the descriptions of each component provided above may apply in the same manner, except for the details described below.

In the projection device according to the present embodiment, the surfaces FL1s to FL3s of the first to third guide lenses FL1 to FL3, each facing the adjacent light source or the light source emitting light to be transmitted, may each be concave toward the light guide LG. Alternatively, the surfaces FL1s to FL3s of the first to third guide lenses FL1 to FL3, each facing the adjacent light source or the light source emitting light to be transmitted, may each be convex toward the adjacent light source.

In addition, the surface FL4s of the fourth guide lens FL4, which faces the lens group LS, may be concave or convex toward the lens group LS. In addition, the fourth guide lens FL4 may have a surface facing the lens group LS and having a positive or negative radius of curvature. The radius of curvature may be determined based on light directed from the light source toward the waveguide.

In addition, the surface FL4s of the fourth guide lens FL4, which faces or is directed toward the lens group LS, may be flat. For example, the radius of curvature of the surface FL4s of the fourth guide lens FL4, which faces or is directed toward the lens group LS, may be 50 or more.

In addition, each of the first to third guide lenses FL1 to FL3 may have the same radius of curvature on both the surface facing the light source and the surface facing the light guide LG. For example, the surfaces FL1s, FL2s, and FL3s of the first to third guide lenses FL1 to FL3, which face the light sources, may have the same curvature. In addition, the surfaces of the first to third guide lenses FL1 to FL3 facing the light guide LG may have the same curvature.

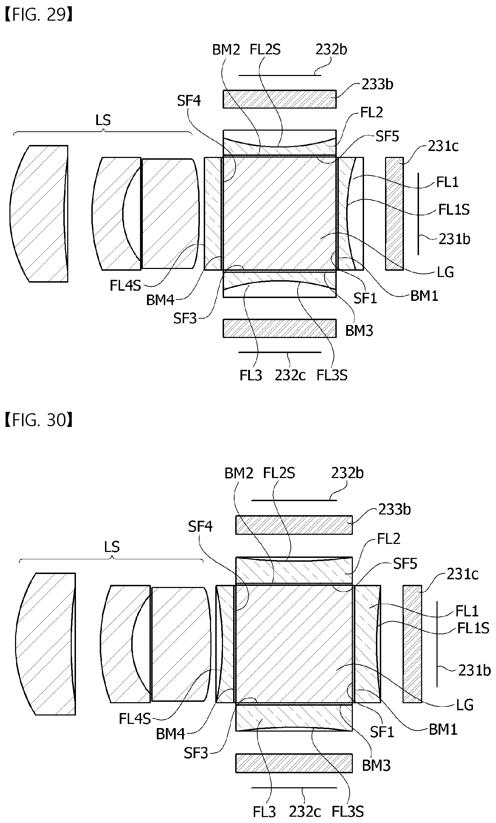

FIG. 29 is a cross-sectional view of a lens group, a light guide, lenses, light sources, and optical elements in a projection device according to a ninth embodiment.

Referring to FIG. 29, in the projection device according to the ninth embodiment, the descriptions of each component provided above may apply in the same manner, except for the details described below.

In the present embodiment, the thicknesses d1, d2, and d3 of the first to third guide lenses FL1 to FL3 may each be different from the thickness d4 of the fourth guide lens FL4. The thicknesses d1, d2, and d3 of the first to third guide lenses FL1 to FL3 may each be greater than the thickness d4 of the fourth guide lens FL4. Thus, spaces for the arrangement and the like of the lenses in the lens group LS may be easily secured. In addition, the thicknesses d1, d2, and d3 of the first to third guide lenses FL1 to FL3 may each be less than the thickness d4 of the fourth guide lens FL4. Thus, total reflection occurring on the fourth outer surface SF4 may be suppressed as much as possible.

Furthermore, the thicknesses d1, d2, and d3 of the first to third guide lenses FL1 to FL3 may be different from each other.

In addition, the surfaces FL1s to FL3s of the first to third guide lenses FL1 to FL3, each facing the adjacent light source or the light source emitting light to be transmitted, may have different radii of curvature. With this configuration, when there are differences in light distributions of the first to third light sources, which emit light with different central wavelengths (e.g., R, G, and B), the first to third guide lenses FL1 to FL3 may compensate for the differences in the light distributions by having the surfaces FL1s to FL3s, each facing the adjacent light source or the light source emitting light to be transmitted, with different radii of curvature.

FIG. 30 is a cross-sectional view of a lens group, a light guide, lenses, light sources, and optical elements in a projection device according to a tenth embodiment.

Referring to FIG. 30, in the projection device according to the tenth embodiment, the descriptions of each component provided above may apply in the same manner, except for the details described below.

In the embodiment, the fourth guide lens FL4 may have a surface facing the lens group LS and having a positive or negative radius of curvature. For example, the fourth guide lens FL4 may have the surface FL4s that is convex or concave toward the lens group LS.

With this configuration, total reflection may be suppressed while additionally performing optical functions such as light collection. Furthermore, miniaturization of the projection device may be realized.

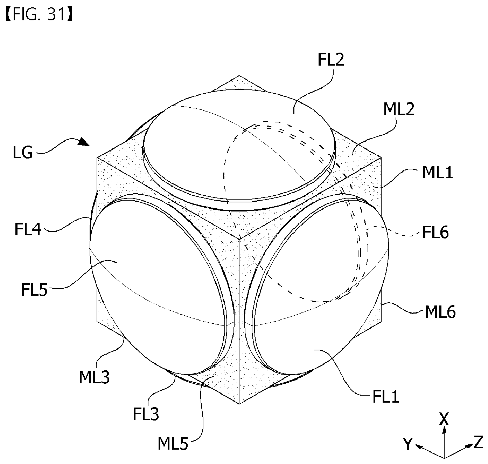

FIG. 31 is a cross-sectional view of a lens group, a light guide, lenses, light sources, and optical elements in a projection device according to an eleventh embodiment.

Referring to FIG. 31, in the projection device according to the tenth embodiment, the descriptions of each component provided above may apply in the same manner, except for the details described below.

According to the embodiment, in the projection device, the outer surface of the light guide LG may include the fifth and sixth outer surfaces SF5 and SF6. Among the outer surfaces of the light guide LG, the fifth outer surface SF5 and the sixth outer surface SF6 may be outer surfaces other than the first to fourth outer surfaces SF1 to SF4.

Furthermore, the lenses or the guide lens may include a fifth guide lens FL5 and a sixth guide lens FL6.

The fifth guide lens FL5 may be disposed on the fifth outer surface SF5. The fifth guide lens FL5 may be coupled to the fifth outer surface SF5. A fifth bonding member may be disposed between the fifth guide lens FL5 and the fifth outer surface SF5. The fifth guide lens FL5 and the fifth outer surface SF5 may be coupled to each other by the fifth bonding member.

The sixth guide lens FL6 may be disposed on the sixth outer surface SF6. The sixth guide lens FL6 may be coupled to the sixth outer surface SF6. A sixth bonding member may be disposed between the sixth guide lens FL6 and the sixth outer surface SF6. The sixth guide lens FL6 and the sixth outer surface SF6 may be coupled to each other by the sixth bonding member.

In an embodiment, each of the fifth guide lens FL5 and the sixth guide lens FL6 may have the same thickness as, or a different thickness from, at least one of the first to fourth guide lenses FL1 to FL4. For example, the fifth guide lens FL5 and the sixth guide lens FL6 may each have the same thickness as at least one of the first to fourth guide lenses FL1 to FL4. Accordingly, ease of manufacturing of the guide lenses may be achieved.

In addition, the fifth guide lens FL5 and the sixth guide lens FL6 may each have a different thickness from at least one of the first to fourth guide lenses FL1 to FL4. For example, the thickness of each of the fifth guide lens FL5 and the sixth guide lens FL6 may be greater than the thickness of at least one of the first to fourth guide lenses FL1 to FL4. Even when light is emitted to the outside through the fifth outer surface SF5 and the sixth outer surface SF of the light guide LG, such light emission may not affect projection, and additional components such as the lens group or light sources may not be disposed. That is, since spaces are present on the sides of the fifth outer surface SF5 and the sixth outer surface SF of the light guide LG, the thicknesses of the fifth guide lens FL5 and the sixth guide lens FL6 may be increased. As a result, light reflected from the outer surfaces of the fifth guide lens FL5 and the sixth guide lens FL6, in a direction opposite to a direction toward the light guide LG, may be suppressed from returning to the light guide LG. Accordingly, the optical performance may be improved.

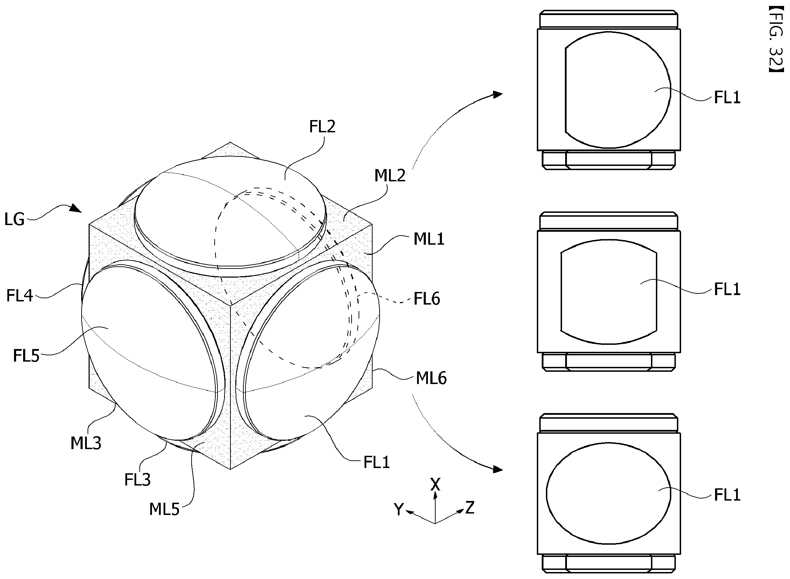

FIG. 32 is a view illustrating various examples of the lens in the projection device according to the embodiment.

Referring to FIG. 32, in the projection device according to the embodiment, the lens or guide lens may be disposed on the outer surface of the light guide LG in various forms. The above-described guide lenses may have a D-cut shape, an I-cut shape, or a circular shape.

For example, an edge, a side surface, or a flat surface of the lens may have the same curvature or radius of curvature. Alternatively, at least one edge, side surface, or flat surface of the lens may have the same curvature (or radius of curvature) as a facing edge, side surface, or flat surface. Alternatively, at least one edge, side surface, or flat surface of the lens may have a different curvature (or radius of curvature) from the facing edge, side surface, or flat surface.

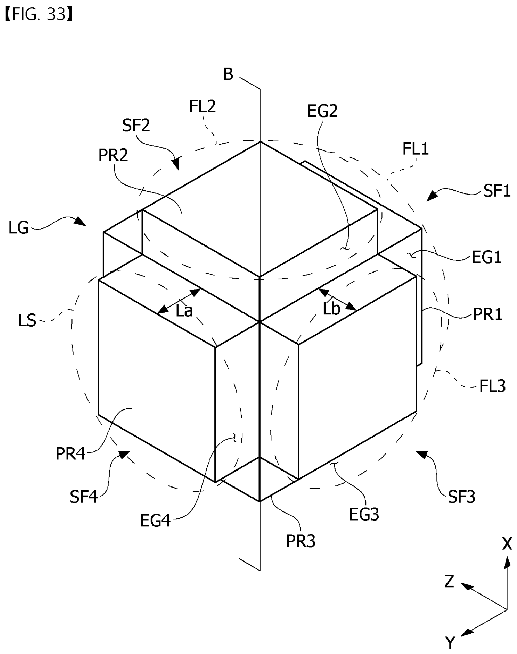

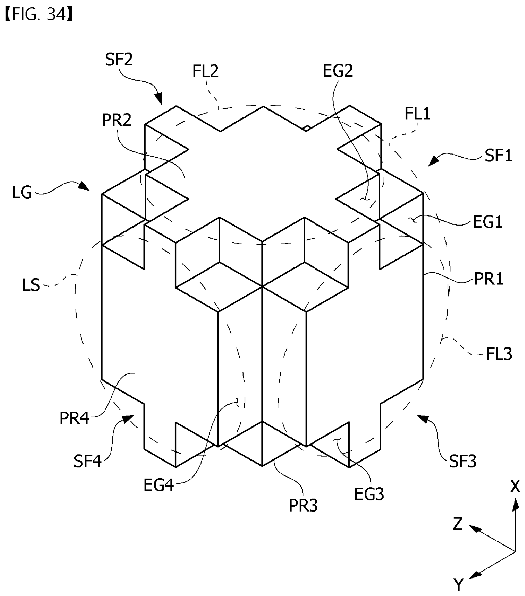

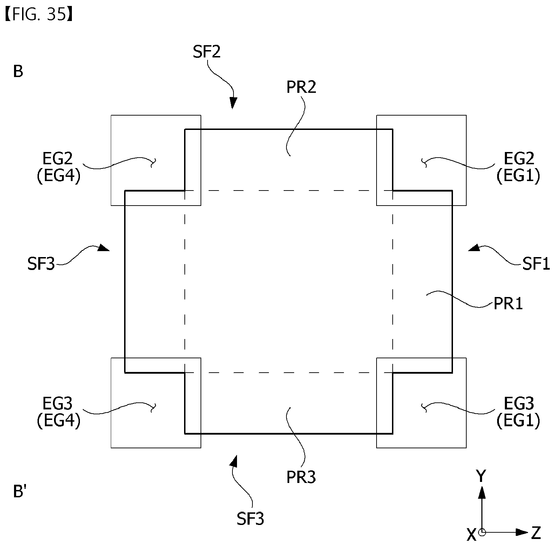

FIG. 33 is a perspective view of a light guide according to an example in a projection device according to a twelfth embodiment, FIG. 34 is a perspective view of a light guide according to another example in the projection device according to the twelfth embodiment, and FIG. 35 is a cross-sectional view of the light guide according to a usage example, taken along line BB' in FIG. 34.

Referring to FIGS. 33 to 35, as described above, in the projection device according to the embodiment, the light guide LG may include grooves EG1, EG2, EG3, and EG4 disposed at edges of the surfaces facing at least one of the light source units 230a, 230b, and 230c (or the light sources) and the lens group LS. For example, the light guide LG may include the grooves EG1, EG2, and EG3 disposed at the edges of the surfaces facing the light source units 230a, 230b, and 230c (or light sources). In addition, the light guide LG may include a groove disposed at an edge of a surface facing at least one of the light source units. In addition, the light guide LG may include the groove EG4 disposed at the edge of the surface facing the lens group LS. The grooves may also be referred to as "edge grooves," "light guide surface grooves," or the like.

In an embodiment, the light guide LG may have six surfaces. In the projection device, the surfaces of the light guide LG refer to surfaces facing the light source units or the lens group.

For example, the surfaces of the light guide LG may include first to third surfaces SF1 to SF3 facing the light sources 232a, 232b, and 232c, respectively. The first surface SF1 may face the first light source 232a or the first light source unit 230a. The second surface SF2 may face the second light source 232b or the second light source unit 230b. The third surface SF3 may face the third light source 232c or the third light source unit 230c. Alternatively, the first light source 232a or the first light source unit may correspond to the first surface SF1. The second light source 232b or the second light source unit may correspond to the second surface SF2. The third light source 232c or the third light source unit may correspond to the third surface SF3. The surface or an outer surface of the light guide LG may also be referred to as a "light guide surface" or an "outer surface."

In addition, the surfaces may include a fourth surface SF4. The fourth surface SF4 may be a surface of the light guide LG facing the lens group LS. In addition, the fourth surface SF4 may correspond to the lens group LS.

The grooves, as described above, may be located at the edges of the surfaces of the light guide LG. Furthermore, the grooves may be formed or located on the edge of each surface. In an embodiment, the grooves may include a first groove EG1, a second groove EG2, a third groove EG3, and a fourth groove EG.

The first groove EG1 may be located or formed on the first surface SF1. The second groove EG2 may be located or formed on the second surface SF2. The third groove EG3 may be located or formed on the third surface SF3. The fourth groove EG4 may be located or formed on the fourth surface SF4.

The light guide GL may include a first protrusion PR1, which is formed inside the first groove EG1 due to the presence of the first groove EG1 and protrudes from the first surface SF1 toward the first light source unit (or the first light source). That is, the projection device according to the embodiment may include the protrusion located inside the groove on the surface.

Similarly, the light guide LG may include a second protrusion PR2, which is located inside the second groove EG2 on the second surface SF2 and protrudes toward the second light source unit (or the second light source). The light guide LG may include a third protrusion PR3, which is located inside the third groove EG3 on the third surface SF3 and protrudes toward the third light source unit (or the third light source).

Further, the first guide lens FL1 may be located between the first surface SF1 and the first light source unit 230a. The second guide lens FL2 may be located between the second surface SF2 and the second light source unit 230b. The third guide lens FL3 may be located between the third surface SF3 and the third light source unit 230c.

Alternatively, the first guide lens FL1 may be located adjacent to the first surface SF1. The second guide lens FL2 may be located adjacent to the second surface SF2. The third guide lens FL3 may be located adjacent to the third surface SF3.

In an embodiment, each lens or the guide lens may be disposed in contact with or spaced apart from each surface. For example, the first guide lens FL1 may be in contact with or spaced apart from the first surface SF1. The first guide lens FL1 may have a predetermined gap from the first surface SF1. The second guide lens FL2 may be in contact with or spaced apart from the second surface SF2. The third guide lens FL3 may be in contact with or spaced apart from the third surface SF3.

In the light guide LG, the grooves may be formed by cutting edges of a hexahedron. As illustrated in the drawing, each of the grooves EG1 to EG4 may have a gentle slope angle as well as a steep vertical slope. For example, each of the grooves EG1 to EG4 may have an inner surface that is convex toward an inner side of the light guide LG or convex toward the adjacent light source.

That is, the light guide LG may have the grooves EG1 to EG4 formed at edges of surfaces from which light is emitted through the light guide LG (i.e., surfaces corresponding to the grooves). With this configuration, total reflection caused by light emitted from the edges of each surface may be suppressed. Accordingly, the projection device in which a flare phenomenon is prevented or reduced may be provided.

A masking layer may be further disposed in each of the grooves EG1 to EG4. The masking layer may include, for example, a black coating, a member for etching treatment, and the like. Accordingly, a total reflection phenomenon that causes the above-described flare phenomenon can be more effectively suppressed.

In addition, the lens or the guide lens may be disposed on the groove such that the groove overlaps each lens. For example, the first guide lens FL1 may be disposed on the first groove EG1 and the first protrusion PR1. In this case, the first groove EG1 may be located outside the first protrusion PR1. Alternatively, the first protrusion PR1 may be located inside the first groove EG1. In addition, the first guide lens FL1 may overlap the first groove EG1 in the second direction (Y-axis direction). Thus, the first protrusion PR1 may overlap the first guide lens FL1. Accordingly, a vacant space may be present along an edge between the first guide lens FL1 and the first surface SF1. The above-described vacant space may correspond to the groove (the first groove). With this configuration, the path of total reflection on each surface or the like can be reduced, while maximizing an effective light area.

Similarly, the second guide lens FL2 may be disposed on the second groove EG2 and the second protrusion PR2. In this case, the second groove EG2 may be located outside the second protrusion PR2. Alternatively, the second protrusion PR2 may be located inside the second groove EG2. The second guide lens FL2 may overlap the second groove EG2 in the first direction (X-axis direction). Thus, the second protrusion PR2 may overlap the second guide lens FL2. Accordingly, a vacant space may be present along an edge between the second guide lens FL2 and the second surface SF2. The above-described vacant space may correspond to the groove (the second groove).

In addition, the third guide lens FL3 may be disposed on the third groove EG3 and the third protrusion PR3. In this case, the third groove EG3 may be located outside the third protrusion PR3. Alternatively, the third protrusion PR3 may be located inside the third groove EG3. The third guide lens FL3 may overlap the third groove EG3 in the first direction (X-axis direction). Thus, the third protrusion PR3 may overlap the third guide lens FL3. Accordingly, a vacant space may be present along an edge between the third guide lens FL3 and the third surface SF3. The above-described vacant space may correspond to the groove (the third groove).

The fourth guide lens FL4 may correspond to the lens (see Ln in FIG. 8), which is closest to the light source or the light guide LG in the lens group LS. The following description will be provided based on this. The fourth guide lens FL4 may be disposed on the fourth groove EG4 and a fourth protrusion PR4. In this case, the fourth groove EG4 may be located outside the fourth protrusion PR4. Alternatively, the fourth protrusion PR4 may be located inside the fourth groove EG4. The fourth guide lens FL4 may overlap the fourth groove EG4 in the second direction (Y-axis direction). Thus, the fourth protrusion PR4 may overlap the fourth guide lens FL4. Accordingly, a vacant space may be present along an edge between the fourth guide lens FL4 and the fourth surface SF4. The above-described vacant space may correspond to the groove (the fourth groove).

Furthermore, the first protrusion PR1 may be located opposite to the fourth protrusion PR4. The first protrusion PR1 may at least partially overlap the fourth protrusion PR4 in the second direction. In addition, the first groove EG1 may be located opposite to the fourth groove EG4. The first groove EG1 and the fourth groove EG4 may at least partially overlap each other in the second direction (Y-axis direction).

In addition, the second protrusion RP2 may be located opposite to the third protrusion PR3. The second protrusion PR2 may at least partially overlap the third protrusion PR3 in the second direction (Y-axis direction). In addition, the second groove EG2 may be located opposite to the third groove EG3. The second groove EG3 and the fourth groove EG4 may at least partially overlap in the second direction (Y-axis direction).

In an embodiment, each lens or guide lens may have positive or negative refractive power. For example, each of the first to third guide lenses FL1 to FL3 may have positive or negative refractive power.

In addition, the surface of each of the lenses or the guide lenses facing the adjacent light source may be convex toward the light source. For example, the surface of the first guide lens FL1 adjacent to the first light source unit or the first light source may be convex toward the first light source unit. In addition, the surface of the second guide lens FL2 adjacent to the second light source unit or the second light source may be convex toward the second light source unit. The surface of the third guide lens FL3 adjacent to the third light source unit or the third light source may be convex toward the third light source. The surface of each guide lens adjacent to the light guide LG may have a large radius of curvature or may be flat. In contrast, the surface of each guide lens adjacent to the light source may be convex toward the light source. Accordingly, light in the light guide may be converged toward the light source. Conversely, light may be emitted from the light source toward the light guide.

Furthermore, as a modified example, the projection device may include an additional lens in contact with each surface. For example, the additional lens may be further disposed between the light guide LG and each guide lens.

In addition, in the projection device according to the embodiment, each groove may have an open-loop or closed-loop structure on the surface. As illustrated in the drawing, the groove may have an open-loop structure on the surface.

Referring further to FIG. 34, in the projection device according to the embodiment, each groove may have an open-loop structure on the surface. On the first surface SF1, the first groove EG1 may have an open-loop structure in the XZ plane. In addition, on the second surface SF2, the second groove EG2 may have an open-loop structure in the YZ plane. In addition, on the third surface SF3, the third groove EG3 may have an open-loop structure in the YZ plane. Further, on the fourth surface SF4, the fourth groove EG4 may have an open-loop structure in the XZ plane. For example, each protrusion may have an additional protrusion extending outward. With this configuration, the protrusions may have different lengths on a plane. For example, the lengths of the protrusions may be different in the second direction or the third direction. For example, in the second protrusion (or the third protrusion), the length in the second direction may be different from the length in the third direction.

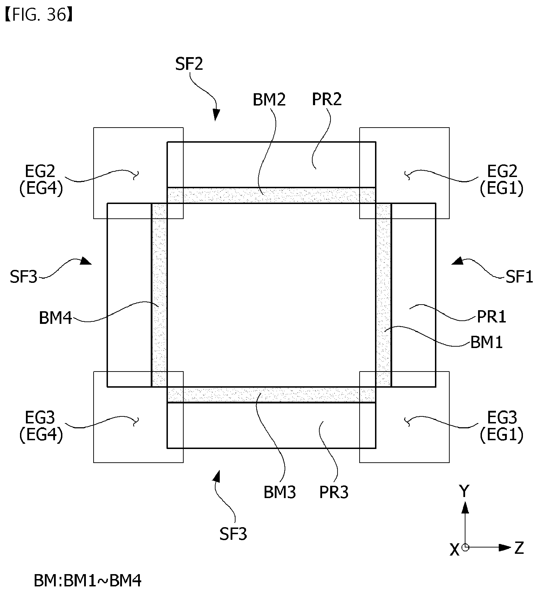

FIG. 36 is a cross-sectional view of a light guide according to another usage example in the projection device according to the twelfth embodiment.

Referring to FIG. 36, the description of the light guide provided above may be equally applied, except for details provided below. The light guide LG according to another usage example may include a protrusion formed as a separate member. That is, the light guide LG may be formed of a prism, the bonding members BM, and attached lenses. In this case, the protrusions may correspond to the attached lenses.

Accordingly, the light guide LG may have a structure including the attached lenses corresponding to respective protrusions located on respective surfaces, and the prism coupled to the attached lenses through the bonding members BM. For example, a first protrusion may be coupled to the prism through the first bonding member BM1. A second protrusion may be coupled to the prism through the second bonding member BM2. A third protrusion may be coupled to the prism through the third bonding member BM3. In addition, a fourth protrusion may be coupled to the prism through the fourth bonding member BM4.

The protrusion serving as the attached lens may have various shapes, such as a circular shape on a plane corresponding to the guide lens, or a protruding shape configured for partial contact with the prism, rather than a hexahedral shape as illustrated in the drawing.

With this configuration, the light guide LG may have the protrusions and grooves as described above. Accordingly, the projection device in which flare is prevented or reduced as described above may be provided. In addition, the projection device that is easy to manufacture may be provided.

At this time, the bonding member BM may be made of a material having the same or a similar refractive index as that of the prism or the attached lens. Furthermore, the bonding member BM may be made of a light-transmissive material.

In addition, the attached lens on the light guide LG may be smaller in length or area than the length or area of the surface. That is, the area of the entire surface of the light guide or the length thereof in one direction may be greater than the area or length of the attached lens disposed in a partial area of the surface. Accordingly, assembly may be facilitated, and suppression of flare due to total reflection through the grooves may be more easily achieved.

As a modified example, the light guide may have a groove formed by cutting on one surface as described above, and may have a groove on another surface through the attached lens and the bonding member.

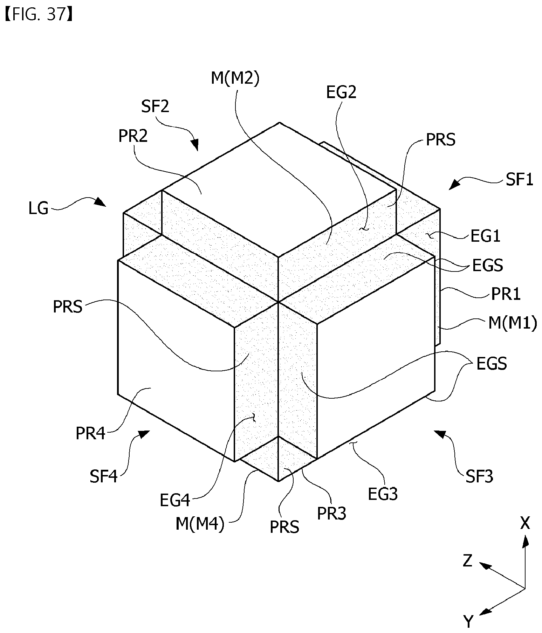

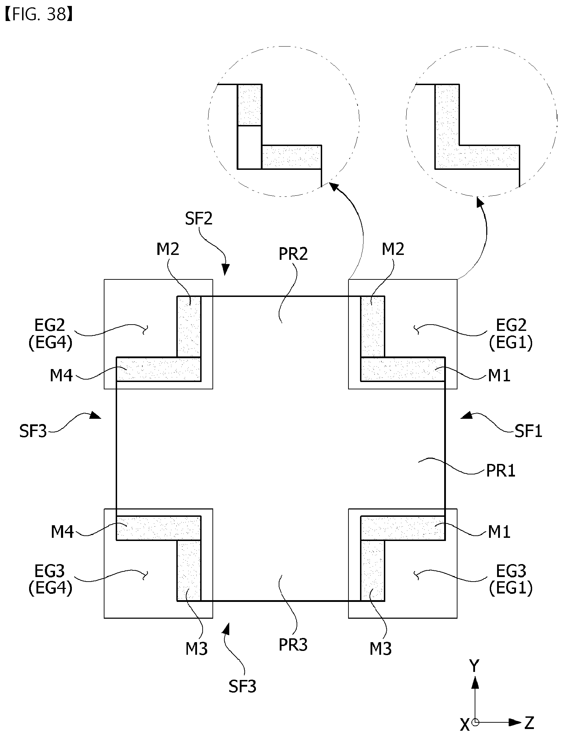

FIG. 37 is a perspective view of a light guide according to still another usage example in the projection device according to the twelfth embodiment, and FIG. 38 is a cross-sectional view of a light guide, in which a masking layer is added, in the projection device according to the twelfth embodiment.

Referring to FIGS. 37 and 38, the projection device according to the embodiment may include a masking layer M at least partially disposed in each groove.

In each of the grooves EG1 to EG4, the masking layer M may be located on a bottom surface EGS or a side surface PRS. The side surface PRS of the groove may correspond to a side surface of each protrusion. Similarly, the bottom surface EGS of the groove may correspond to a side surface of a protrusion on each of the other surfaces of the light guide LG (other than the first to fourth surfaces). For example, a first masking layer M1 may be located in the first groove EG1. A second masking layer M2 may be located in the second groove EG2. A third masking layer M3 may be located in the third groove EG3. A fourth masking layer M4 may be located in the fourth groove EG4.

The masking layer M may be located in each of the first to fourth grooves EG1 to EG4. Accordingly, light emitted from the light source may pass through each guide lens after passing through the edge of each surface, but may not be emitted through the fourth guide lens FL4 and the lens group. That is, total reflection occurring at the edge of the light guide LG may be efficiently blocked by the masking layer M. For example, the masking layer M may be made of a light-absorbing material.

As another example, the masking layer M may be located only in some of the grooves. For example, only the first to third masking layers M1 to M4 may be located in the grooves of the light guide LG. Accordingly, total reflection of light incident on the light guide LG from the light source may be efficiently reduced.

As a modified example, the masking layer M may be located on a portion of the side surface PRS of the groove. For example, the masking layer M may be located adjacent to an edge of the side surface PRS of the groove. The masking layer may not be located in an area adjacent to the center of the light guide on the side surface PRS of the groove. In addition, the masking layer M may be located adjacent to an edge of the bottom surface EGS of the groove. The masking layer may not be located in an area adjacent to the center of the light guide on the bottom surface EGS of the groove.

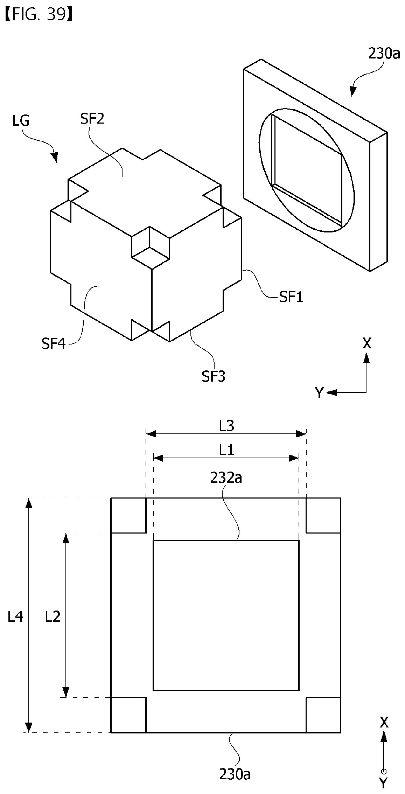

FIG. 39 is a view illustrating a relationship between the light guide and the light source unit in the projection device according to the twelfth embodiment.

Referring to FIG. 39, in the projection device, the first to third light sources may correspond to aspect ratios of the first to third surfaces SF1 to SF3 facing the respective light sources. For example, in the first light source unit 320a, the first light source 232a may have a first aspect ratio, which is a ratio of a length L2 in a first direction to a length L1 in a third direction.

In addition, the first protrusion PR1 of the first surface SF1 may have a second aspect ratio, which is a ratio of the length L2 in the first direction to a length L3 in the third direction. In this case, the first aspect ratio and the second aspect ratio may be similar or identical to each other. When the ratios are similar, the first aspect ratio may be within 10% of the second aspect ratio. With this configuration, flare reduction and the like may be more effectively provided.

Furthermore, an area of the light source may be smaller than an area of each surface. For example, the area (in the XZ plane) of the first light source 232a may be smaller than the area (in the XZ plane) of the first surface SF.

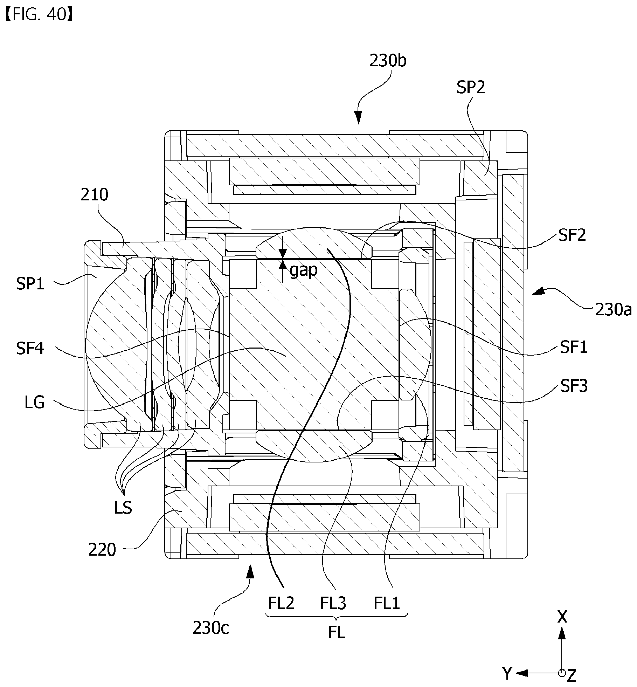

FIG. 40 is a view of a projection device according to a thirteenth embodiment.

Referring to FIG. 40, in the projection device according to the thirteenth embodiment, the descriptions of each component provided above may apply in the same manner, except for the details described below.

In the present embodiment, the light guide LG may be spaced apart from or in contact with the guide lenses FL1 to FL4 as described above. In this case, the guide lenses FL1 to LF4 may be disposed on the surfaces SF1 to SF4 of the light guide LG and may be smaller in length or area than the length or area of the surfaces.

That is, the guide lens may be located in an inner area of the groove on the surfaces. Accordingly, the lens or the guide lens may not be disposed on the groove and may not overlap the groove. For example, the first guide lens FL1 may be disposed on the first protrusion PR1. In this case, the first groove EG1 may be located outside the first protrusion PR1. Alternatively, the first protrusion PR1 may be located inside the first groove EG1. In addition, the first guide lens FL1 may not overlap the first groove EG1 in the second direction (Y-axis direction). The first protrusion PR1 may overlap the first guide lens FL1. Accordingly, the first guide lens FL1 may be located in an open area of the first surface SF1.

Similarly, the second guide lens FL2 may be disposed on the second protrusion PR2. In this case, the second groove EG2 may be located outside the second protrusion PR2. Alternatively, the second protrusion PR2 may be located inside the second groove EG2. The second guide lens FL2 may not overlap the second groove EG2 in the first direction (X-axis direction). The second protrusion PR2 may overlap the second guide lens FL2.

In addition, the third guide lens FL3 may be disposed on the third protrusion PR3. In this case, the third groove EG3 may be located outside the third protrusion PR3. Alternatively, the third protrusion PR3 may be located inside the third groove EG3. The third guide lens FL3 may not overlap the third groove EG3 in the first direction (X-axis direction). The third protrusion PR3 may overlap the third guide lens FL3.

The fourth guide lens FL4 may be disposed on the fourth protrusion PR4. In this case, the fourth groove EG4 may be located outside the fourth protrusion PR4. Alternatively, the fourth protrusion PR4 may be located inside the fourth groove EG4. The fourth guide lens FL4 may not overlap the fourth groove EG4 in the second direction (Y-axis direction), and the fourth protrusion PR4 may overlap the fourth guide lens FL4.

## Claims

1. A projection device comprising:
a barrel in which a lens group is disposed;
a light guide disposed in the barrel;
a light source configured to emit light to the light guide;
a lens disposed between the light source and the light guide; and
a masking layer disposed between the light guide and the lens or between the light guide and the lens group,
wherein the masking layer is disposed along an edge of an outer surface of the light guide.

2. The projection device of claim 1, wherein the outer surface of the light guide includes:
first to third outer surfaces facing the light source; and
a fourth outer surface facing the lens group.

3. The projection device of claim 2, wherein the masking layer is disposed on at least one of the first to fourth outer surfaces.

4. The projection device of claim 3, wherein the masking layer includes first to fourth masking layers disposed on the first to fourth outer surfaces, respectively.

5. The projection device of claim 1, further comprising a bonding member disposed between the light guide and the lens or between the light guide and the lens group.

6. The projection device of claim 5, wherein the bonding member is in contact with the masking layer, the lens, and the light guide.

7. The projection device of claim 1, wherein the masking layer is in contact with the lens or the outer surface of the light guide.

8. The projection device of claim 2, wherein
the light guide includes a fifth outer surface and a sixth outer surface, and
the fifth outer surface and the sixth outer surface are outer surfaces of the light guide other than the first to fourth outer surfaces.

9. The projection device of claim 8, wherein the masking layer includes first to fourth masking layers disposed on the first to fourth outer surfaces.

10. The projection device of claim 9, comprising:
a fifth masking layer disposed on the fifth outer surface; and
a sixth masking layer disposed on the sixth outer surface.
